# EUROPÄISCHE PATENTANMELDUNG

(11) **EP 4 755 734 A1**
(43) Veröffentlichungstag der Anmeldung: **10.06.2026**
(21) Anmeldenummer: 25220376.5
(22) Anmeldetag: 03.12.2025
(51) Int. Cl.: B60S 3/04, G06V 20/56, B60S 3/06

(54) **OBJEKTERKENNUNGSTECHNIK FÜR FAHRZEUGBEHANDLUNGSANLAGEN UND ANLAGENSTEUERUNG**

(30) Priorität: 03.12.2024 DE 202024107006 U
(71) Anmelder: Otto Christ AG, 87734 Benningen (DE)
(72) Erfinder: CHRIST, Markus, 87700 Memmingen (DE); BARNICKEL, Georg, 87734 Benningen (DE); SPIEß, Jonas, 87734 Benningen (DE)
(74) Vertreter: ERNICKE Patent- und Rechtsanwälte PartmbB

(57) **Zusammenfassung**

Die Erfindung betrifft verschiedene Aspekte einer Objekterkennungstechnik für Fahrzeugbehandlungsanlagen und eine entsprechend ausgebildete Anlagensteuerung. Gemäß einem ersten Aspekt erkennt ein KI-Modul (14) in Umfelderfassungsdaten (9) eines bildgebenden Sensors (10, **11)** eine für den Behandlungseingriff relevante Ausnahmebeschaffenheit (KS) des Fahrzeugs. Ein Behandlungsprogramm der Fahrzeugbehandlung wird auf Basis der erkannten Ausnahmebeschaffenheit (KS) adaptiert und gestartet oder fortsetzt. Das KI-Modul (14) ist dazu trainiert das Vorhandensein eines an der Fahrzeugkontur angebrachten Anbauteils (24) zu erkennen und ein erkanntes Anbauteil mit einem bestimmten Anbauteil-Typ (TA) zu klassifizieren, wobei die Adaption spezifisch für das erkannte Anbauteil (24) erfolgt; und/oder ein Fahrzeug-Subobjekt (21), nämlich ein Fahrzeugteil (23) zu erkennen, und für das Fahrzeugteil (23) mindestens eine Ausnahme-Eigenschaft (LS) zu klassifizieren, die als zulässig für eine Fahrzeugbehandlung definiert ist, wobei die Adaption des Behandlungsprogramms spezifisch für das erkannte Fahrzeugteil (23) und die Ausnahme-Eigenschaft (LS) erfolgt.

## Beschreibung

Die vorliegende Erfindung betrifft das Gebiet der Steuerung von Fahrzeugbehandlungsanlagen und den Einsatz von Objekterkennungstechniken vor und während einer Fahrzeugbehandlung.

Bisher bekannte Fahrzeugbehandlungsanlagen sind in der Regel darauf beschränkt, dass eine Fahrzeugbehandlung fehlerfrei durchgeführt werden kann, wenn das zu behandelnde Fahrzeug keine unzulässige Formgebung aufweist, das heißt, dass beispielsweise die (für die Durchführung einer Fahrzeugbehandlung relevanten) Fahrzeugteile eine vorgegebene Standard-Positionen haben sollten. Bei den meisten Fahrzeugbehandlungsanlagen ist beispielsweise vorgegeben, dass Antennen eingefahren und Seitenspiegel eingeklappt sein sollen. Ferner kann in der Regel eine Fahrzeugbehandlung nicht oder nur mit Beeinträchtigungen ausgeführt werden, wenn an dem Fahrzeug ein oder mehrere Anbauteile wie Gepäck- oder Fahrradträger angeordnet sind. Die Prüfung des Vorliegens solcher Voraussetzungen obliegt in der Regel einem Nutzer, also beispielsweise einem Kunden, der eine Selbstbedienungs-Fahrzeugbehandlungsanlage für sein Fahrzeug nutzt, und/oder einem Anlagenbetreiber bzw. Mitarbeitern des Betreiberunternehmens.

In der Praxis ist es ferner bekannt, Bildverarbeitungstechniken für die Erkennung von Fahrzeugkonturen einzusetzen.

DE 20 20219 105 667 U1 offenbart eine Überwachungsvorrichtung zur Absicherung einer Fahrzeugbehandlungsanlage. Wenn das Öffnen einer Fahrzeugtüre erkannt wird, wird ein Nothalt der Fahrzeugbehandlungsanlage ausgelöst.

US 2024 / 0 375 619 A1 offenbart eine Selbst-Adaption von Fahrzeugwaschanlagenausstattungen. Mit einem LiDAR Sensor kann eine Mehrzahl von Punkten erfasst werden, die gemeinsam eine Kontur des Fahrzeugs definieren. Diese Punkte können auch Accessories wie einen Kühlergrill einschließen. Ein Fahrzeug kann nach Typ und Modelljahr klassifiziert werden (bspw. 2006 BMW M3), um ein zugehöriges 3D-Modell mit der Fahrzeugkontur zu laden. Aus der Kontur des Fahrzeugs werden Abmaße wie eine Länge oder Höhe des Fahrzeugs ermittelt, auf deren Basis die Bewegung der Fahrzeugwaschanlagenausstattung gesteuert wird.

Aus der nachveröffentlichen WO 2025 / 091 013 A1 ist eine intelligente Kollisionsvermeidung für Waschanlagen bekannt, bei der ein Heck eines vorausfahrenden und eine Front eines folgenden Fahrzeugs in einer Waschstrasse erkannt werden.

Die bisher bekannten Fahrzeugbehandlungsanlagen und deren Anlagensteuerungen sind nicht optimal ausgebildet.

Es ist Aufgabe der vorliegenden Erfindung, eine verbesserte Objekterkennungstechnik und eine verbesserte Anlagensteuerung für Fahrzeugbehandlungsanlagen aufzuzeigen.

Die Erfindung löst diese Aufgabe durch die Merkmale der eigenständigen Ansprüche.

Die vorliegende Offenbarung umfasst eine Mehrzahl von Aspekten, die einzeln oder gemeinsam einen Beitrag zur Lösung der vorgenannten Aufgabe leisten. Diese Aspekte können jeweils für sich allein oder in einer beliebigen Kombination genutzt werden.

Vorteile der Aspekte können jeweils einzeln oder gemeinsam sein, dass
▪ Interaktionsfehlerzustände erkannt werden, die zwischen der Fahrzeugbehandlungsanlage, insbesondere einem Maschinenteil, und dem zu behandelnden Fahrzeug auftreten können oder deren Auftreten bevorstehen kann - hierdurch können bisher unerkannte Fehlerzustände vermieden, erkannt oder (teil-)automatisch behandelt werden;
▪ eine automatische Erkennung und Handhabung von Ausnahmebeschaffenheiten erfolgt, insbesondere mit Unterscheidung von zulässigen und unzulässigen Ausnahmebeschaffenheiten - hierdurch können automatische Fahrzeugbehandlungen für Situationen ermöglicht werden, die bisher einer manuellen oder menschlich unterstützten Behandlung vorbehalten waren;
▪ eine computerlesbare geordnete Datenstruktur ausgegeben wird, die eine Ausnahmebeschaffenheit eines zu behandelnden Fahrzeugs derart definiert, dass eine Anlagensteuerung geeignete Handlungen ausführen kann - hierdurch wird es ermöglicht, eine Mehrzahl von Ausnahmebeschaffenheiten und gebenenfalls vorliegende Unterzustände in einer computerverarbeitbaren Form wiederzugeben, sodass deren Berücksichtigung bei der automatisierten Behandlung ermöglicht wird;
▪ eine Erkennung von Fahrzeugteilen eines zu behandelnden Fahrzeugs und/oder von Anbauteilen an einem zu behandelnden Fahrzeug in einer automatisierten Weise ermöglicht wird, insbesondere mit einer Unterscheidung verschiedener zulässiger und unzulässiger Zustände - hierdurch kann die Zahl der automatisch handhabbaren Ausnahmebeschaffenheiten deutlich vergrößert werden, was die Einsetzbarkeit der Behandlungsanlage verbessert; Die unterscheidbaren Zustände können insbesondere als (momentane) Eigenschaften eines Fahrzeugteils und/oder eines Anbauteils klassifiziert werden, weiter insbesondere als eine Standard-Eigenschaft und/oder mindestens eine Ausnahme-Eigenschaft;
▪ eine verteilte Ausführung einerseits von Verfahrensschritten zur Objekterkennung und andererseits von Verfahrensschritten zu einer Steuerung einer Behandlungsanlage auf unterschiedlichen Datenverarbeitungsanlagen ermöglicht wird, insbesondere auf einer lokalen Datenverarbeitungseinrichtung an der Behandlungsanlage und einer entfernten Datenverarbeitungseinrichtung, bspw. einem Server;
▪ eine besonders schnelle und/oder genaue Erkennung von Ausnahmebeschaffenheiten mit Unterscheidung mehrerer möglicher Fahrzeug-Subobjekte ermöglicht wird, insbesondere mit Unterscheidung von Fahrzeugteilen und/oder Anbauteilen - hierdurch können auch komplexe Ausnahmebeschaffenheiten mit einer Mehrzahl an zu berücksichtigenden Teilen für die Anlagensteuerung beherrschbar werden;
▪ Schäden vermieden werden, die durch eine Ausnahmebeschaffenheit verursacht werden könnten, wenn diese Ausnahmebeschaffenheit vor oder direkt zu Beginn einer Fahrzeugbehandlung auftritt oder erkannt wird.
▪ Schäden oder Folgeschäden vermieden oder begrenzt werden, die durch einen Interaktionsfehlerzustand und/oder eine Ausnahmebeschaffenheit verursacht werden könnten, wenn dieser Interaktionsfehlerzustand / diese Ausnahmebeschaffenheit erst nachträglich, d.h. während einer Fahrzeugbehandlung auftritt oder erkannt wird.
▪ Eine Objekterkennung besonders ressourceneffizient ausführbar ist.

Ein eigenständiger Aspekt der vorliegenden Offenbarung sieht eine Fahrzeugbehandlungsanlagensteuerung vor, die eine Umfelderfassung aufweist, welche Umfelderfassungsdaten (direkt oder indirekt) von mindestens einem bevorzugt bildgebenden Sensor bezieht. Die Umfelderfassungsdaten umfassen zumindest zeitweise eine Repräsentation mindestens eines zu behandelnden Fahrzeugs und eine Repräsentation zumindest eines Maschinenteils der Fahrzeugbehandlungsanlage. Die Umfelderfassung umfasst weiterhin ein trainiertes KI-Modul umfasst, das innerhalb der momentanen Umfelderfassungsdaten eine Interaktion zwischen der Fahrzeugbehandlungsanlage und dem mindestens einen zu behandelnden Fahrzeug analysiert und/oder einen Interaktionsfehlerzustand erkennt. Alternativ oder zusätzlich kann vorgesehen sein, dass die Fahrzeugbehandlungsanlagensteuerung einen erkannten Interaktionsfehlerzustand, der insbesondere durch ein entferntes System erkannt wird, über eine Kommunikationsschnittstelle bezieht.

Die Fahrzeugbehandlungsanlagensteuerung steuert bevorzugt eine Betätigung der Fahrzeugbehandlungsanlage auf Basis des erkannten Interaktionsfehlerzustands.

Die Fahrzeugbehandlungsanlagensteuerung kann insbesondere eine laufende Betätigung der Fahrzeugbehandlungsanlage adaptieren und starten oder fortsetzen, ODER eine laufende Betätigung der Fahrzeugbehandlungsanlage unterbrechen; UND/ODER ein Mitigationsprogramm ausführen, insbesondere ein vordefiniertes Mitigationsprogramm oder ein ad-hoc Mitigationsprogramm, das situationsspezifisch aus mindestens zwei Mitigationsschritten gebildet wird.

Ein Interaktionsfehlerzustand kann beliebig definiert sein. Mögliche Interaktionsfehlerzustände umfassen:
Ein Festhängen einer Behandlungsbürste an einem Fahrzeug; UND/ODER
Eine unzulässige Fehlorientierung einer Behandlungsbürste gegenüber einer Oberfläche des zu behandelnden Fahrzeugs, insbesondere einen unzulässigen Neigungswinkel einer Behandlungsbürste; UND/ODER
Einen unzulässigen bevorstehenden oder bereits erfolgten Kontakt zwischen einem Maschinenteil und dem zu behandelnden Fahrzeug, insbesondere einen unzulässigen Kontakt zu einem Fern-Behandlungsaggregat, das regulär nicht für eine Kontaktierung mit dem Fahrzeug vorgesehen ist.

Ein oder mehrere Interaktionsfehlerzustände können beispielsweise erfasst werden, wenn eine Seitenwalze steht schräg, da sie sich in der Anhängerkupplung verfangen hat. Hierauf kann ein Mitigationsgrogramm ausgeführt werden, das die Seitenwalze befreit. Alternativ oder zusätzlich kann erfasst werden, dass ein (zusätzliches) für die Behandlung nicht vorgesehenes Fahrzeug in den (für ein anderes Fahrzeug vorgesehenen) Behandlungsbereich eindringt oder eingedrungen ist. Hierauf kann beispielsweise ein Mitigationsprogramm ausgeführt werden, das mindestens ein Maschinenbauteil aus einer erwarteten Kollisionsstellung entfernt.

Ein weiterer Interaktionsfehlerzustand kann erfassen, dass eine Dachwalze gegenüber der Horizontalrichtung schräg hängt, beispielsweise weil ein Führungsmittel gerissen ist, und/oder dass eine Seitenwalze oder ein Waschbesatz am Boden liegt, beispielsweise weil eine Aufhängung / Befestigung versagt hat.

Ein weiterer Aspekt der Offenbarung betrifft ein Objekterkennungsverfahrens zur Unterstützung einer Anlagensteuerung in einer Fahrzeugbehandlungsanlage. Das Objekterkennungsverfahren ist bevorzugt als ein computerimplementiertes Verfahren ausgebildet. Es kann auf einer Datenverarbeitungseinrichtung, insbesondere auf einer Anlagensteuerung oder auf einem externen Rechenmittel, insbesondere einem Server ausgeführt werden. Das Objekterkennungsverfahren gemäß diesem Aspekt umfasst die folgenden Schritte:
Beziehen von Umfelderfassungsdaten, die durch mindestens einen bevorzugt bildgebenden Sensor an der Fahrzeugbehandlungsanlage erfasst sind. Die Umfelderfassungsdaten umfassen zumindest zeitweise eine Repräsentation mindestens eines zu behandelnden Fahrzeugs und eine Repräsentation zumindest eines Maschinenteils der Fahrzeugbehandlungsanlage; mittels eines trainierten KI-Moduls:
Analysieren einer Interaktion zwischen der Fahrzeugbehandlungsanlage und dem mindestens einen zu behandelnden Fahrzeug und/oder Erkennen eines Interaktionsfehlerzustands; Ausgeben eines (erkannten) Interaktionsfehlerzustands.

Ein eigenständiger Aspekt der vorliegenden Offenbarung sieht vor, dass eine Fahrzeugbehandlungsanlagensteuerung (d.h. insbesondere eine Anlagensteuerung für eine Fahrzeugbehandlungsanlage) eine Umfelderfassung umfasst, die Umfelderfassungsdaten von mindestens einem bevorzugt bildgebenden Sensor bezieht, wobei die Umfelderfassungsdaten zumindest zeitweise eine Repräsentation eines zu behandelnden Fahrzeugs umfassen, wobei die Umfelderfassung weiterhin ein trainiertes KI-Modul umfasst, das innerhalb der momentanen Umfelderfassungsdaten eine Beschaffenheit des zu behandelnden Fahrzeugs analysiert und eine für den Behandlungseingriff relevante Ausnahmebeschaffenheit des Fahrzeugs erkennt, wobei die Fahrzeugbehandlungsanlagensteuerung weiterhin auf Basis der erkannten Ausnahmebeschaffenheit des zu behandelnden Fahrzeugs einen Start der Fahrzeugbehandlung verhindert oder ein Behandlungsprogramm für die Fahrzeugbehandlung adaptiert und startet oder fortsetzt.

Ein weiterer eigenständiger Aspekt der vorliegenden Offenbarung sieht vor, dass eine Fahrzeugbehandlungsanlagensteuerung eine Umfelderfassung umfasst, die Umfelderfassungsdaten von mindestens einem bevorzugt bildgebenden Sensor bezieht, wobei die Umfelderfassungsdaten zumindest zeitweise eine Repräsentation eines zu behandelnden Fahrzeugs umfassen, wobei die Umfelderfassung weiterhin ein trainiertes KI-Modul umfasst, das innerhalb der momentanen Umfelderfassungsdaten eine Beschaffenheit des zu behandelnden Fahrzeugs analysiert und eine für den Behandlungseingriff relevante Ausnahmebeschaffenheit des Fahrzeugs erkennt, wobei die Fahrzeugbehandlungsanlagensteuerung weiterhin auf Basis der erkannten Ausnahmebeschaffenheit des zu behandelnden Fahrzeugs eine laufende Fahrzeugbehandlung unterbricht oder ein laufendes Behandlungsprogramm der Fahrzeugbehandlung adaptiert und fortsetzt.

Die vorgenannten Aspekte können in einer bevorzugten Ausführung kombiniert sein.

Die Fahrzeugbehandlungsanlagensteuerung und oder die Umfelderfassung und/oder die Ablaufsteuerung können einzeln oder gemeinsam dazu ausgebildet sein, eine erkannte Ausnahmebeschaffenheit als zulässig oder unzulässig zu klassifizieren, insbesondere als zulässig oder unzulässig für eine Adaption eines Behandlungsprogramms.

Die Erkennung einer Ausnahmebeschaffenheit des zu behandelnden Fahrzeugs kann auf beliebige Weise erfolgen. Bevorzugt erfolgt die Erkennung durch mindestens ein KI-Modul. Das KI-Modul kann eine beliebige Ausbildung und Anordnung haben. Das mindestens eine KI-Modul kann beispielsweise mit einem Sensor integriert sein und/oder in einer Anlagensteuerung vorliegen und/oder durch eine separate (lokale oder entfernte) Datenverarbeitungseinrichtung / einen Datenverarbeitungsdienst implementiert sein. Bevorzugt kann das KI-Modul innerhalb momentaner Erfassungsdaten, die von mindestens einem Sensor an der Behandlungsanlage bezogen werden und die zumindest zeitweise eine Repräsentation eines zu behandelnden Fahrzeugs umfassen, eine Beschaffenheit des zu behandelnden Fahrzeugs analysieren und/oder eine (für den Behandlungseingriff relevante) Ausnahmebeschaffenheit des Fahrzeugs erkennen. Die Analyse kann mindestens ein Element umfassen aus der Gruppe von: Erkennen eines Fahrzeugobjekts, Erkennen eines Fahrzeug-Subobjekts, Identifizieren eines Fahrzeug-Subobjekts als ein (bestimmtes) Fahrzeugteil, Identifizieren eines Fahrzeug-Subobjekts als ein (bestimmtes) Anbauteil, Klassifizieren einer Standard-Eigenschaft und/oder einer Ausnahme-Eigenschaft, Schätzen einer Subobjekt-Lage, Schätzen einer Subobjekt-Ausdehnung, Identifizieren eines key-points, Identifizieren eines Schadens an dem zu behandelnden Fahrzeug. Das KI-Modul kann eine oder mehrere separate Strukturen für die Durchführung der Analyse umfassen, insbesondere ein oder mehrere separate neuronale Netze.

Ein weiterer Aspekt der vorliegenden Offenbarung betrifft eine Anlagensteuerung für eine Fahrzeugbehandlungsanlage, wobei die Anlagensteuerung eine erkannte Ausnahmebeschaffenheit eines zu behandelnden Fahrzeugs bezieht, die insbesondere durch ein externes Mittel erkannt ist, bspw. durch eine entfernte Datenverarbeitungseinrichtung oder ein dort ausgeführtes Objekterkennungsverfahren, und wobei die Ausnahmebeschaffenheit insbesondere in computerlesbarer Form als eine geordnete Datenstruktur vorliegt oder empfangen ist. Die Anlagensteuerung adaptiert ein Behandlungsprogramm auf Basis der erkannten Ausnahmebeschaffenheit und führt das adaptierte Behandlungsprogramm aus (und/oder setzt eine unterbrochene Fahrzeugbehandlung mit dem adaptierten Behandlungsprogramm fort). Die Adaption kann auf beliebige Weise erfolgen. Durch eine Adaption kann erreicht werden, dass eine Fahrzeugbehandlung (trotz des Vorliegens der erkannten Ausnahmebeschaffenheit) ausgeführt oder abgeschlossen werden kann.

Eine Adaption kann bevorzugt spezifisch für ein Subobjekt des zu behandelnden Fahrzeugs (d.h. ein Fahrzeug-Subobjekt), für eine (in der erkannten Ausnahmebeschaffenheit definierte) Ausnahme-Eigenschaft und/oder für eine (in der erkannten Ausnahmebeschaffenheit definierte) Subobjekt-Lokalisierung erfolgen.

Eine Adaption kann vorsehen, dass an einem (in der erkannten Ausnahmebeschaffenheit definierten) Fahrzeug-Subobjekt, insbesondere an einem Fahrzeugteil des zu behandelnden Fahrzeugs oder an einem Anbauteil am Fahrzeug, ein veränderter Behandlungseingriff erfolgt oder ein Behandlungseingriff lokal unterbleibt (jeweils im Vergleich zu dem regulären Behandlungseingriff ohne Adaption), UND/ODER dass ein alternativer Behandlungsgriff durch ein anderes Behandlungsaggregat erfolgt.

Eine Adaption kann vorsehen, dass mindestens ein Behandlungsaggregat der Fahrzeugbehandlungsanlage (im Vergleich zu dem regulären Behandlungseingriff ohne Adaption) mit einer Programmänderung betätigt wird, weiter insbesondere dass mindestens ein Behandlungsaggregat mit einer adaptierten Bewegungsbahn und/oder einer gesteigerten Sensitivität bewegt wird. Alternativ oder zusätzlich kann eine Adaption vorsehen, dass mindestens ein Behandlungsaggregat, insbesondere ein kontaktierendes Behandlungsaggregat der Fahrzeugbehandlungsanlage, mit einem lokal verminderten körperlichen Behandlungseingriff oder lokal ohne körperlichen Behandlungseingriff bewegt wird. Alternativ oder zusätzlich kann eine Adaption vorsehen, dass eine regulär vorgesehene Behandlung mit einem ersten Behandlungsaggregat durch eine alternative Behandlung mit einem anderen Behandlungsaggregat ersetzt wird, wobei insbesondere das erste Behandlungsaggregat ein kontaktierendes Behandlungsaggregat sein kann und weiter insbesondere das andere Behandlungsaggregat ein Fern-Behandlungsaggregat sein kann.

Ein weiterer Aspekt der vorliegenden Offenbarung betrifft eine geordnete Datenstruktur, die auf einem Datenträger gespeichert über eine Kommunikationsschnittstelle gesendet oder empfangen ist, wobei die geordnete Datenstruktur ein einer computerlesbaren Form eine Ausnahmebeschaffenheit eines zu behandelnden Fahrzeugs definiert und mindestens ein erkanntes Fahrzeug-Subobjekt umfasst. Bevorzugt umfasst die geordnete Datenstruktur weiterhin eine erkannte Ausnahme-Eigenschaft eines erkannten Subobjekts und/oder eine Subobjekt-Lokalisierung. Die geordnete Datenstruktur ist bevorzugt durch ein Objekterkennungsverfahren gemäß der vorliegenden Offenbarung erzeugt und/oder von einer Umfelderfassung gemäß der vorliegenden Offenbarung ausgegeben. Die geordnete Datenstruktur kann von einem Steuerverfahren gemäß der vorliegenden Offenbarung und/oder von einer Anlagensteuerung gemäß der vorliegenden Offenbarung bezogen und verarbeitet werden, insbesondere zur (angepassten) Kontrolle der Behandlung eines Fahrzeugs in einer Fahrzeugbehandlungsanlage.

Ein weiterer Aspekt der vorliegenden Offenbarung betrifft eine Objekterkennungstechnik, insbesondere ein Objekterkennungsverfahren zur Unterstützung einer Anlagensteuerung in einer Fahrzeugbehandlungsanlage. Das Objekterkennungsverfahren ist bevorzugt als ein computerimplementiertes Verfahren auf einer Datenverarbeitungseinrichtung ausführbar, insbesondere auf der Anlagensteuerung einer Fahrzeugbehandlungsanlage. Alternativ kann das Objekterkennungsverfahren entfernt von einer Fahrzeugbehandlungsanlage ausgeführt werden und beispielsweise Sensordaten (Umfelderfassungsdaten) von einer Fahrzeugbehandlungsanlage beziehen und/oder eine erkannte Ausnahmebeschaffenheit ausgeben.

Das Objekterkennungsverfahren umfasst bevorzugt die folgenden Schritte:
Beziehen von Umfelderfassungsdaten, die durch mindestens einen bevorzugt bildgebenden Sensor an einer Fahrzeugbehandlungsanlage erfasst sind, wobei die Umfelderfassungsdaten zumindest zeitweise eine Repräsentation eines zu behandelnden Fahrzeugs umfassen.

Mittels eines (trainierten) KI-Moduls: Analysieren einer Beschaffenheit des zu behandelnden Fahrzeugs innerhalb der momentanen Umfelderfassungsdaten und Erkennen einer für den Behandlungseingriff der Fahrzeugbehandlungsanlage relevanten Ausnahmebeschaffenheit des Fahrzeugs.

Ausgeben der erkannten Ausnahmebeschaffenheit des Fahrzeugs, wobei die erkannte Ausnahmebeschaffenheit mindestens ein Fahrzeug-Subobjekt und bevorzugt weiterhin dessen Subobjekt-Lokalisierung und/oder eine Ausnahme-Eigenschaft des Fahrzeug-Subobjekts in computerlesbarer Form definiert.

Die erkannte Ausnahmebeschaffenheit ist bevorzugt eine geordnete Datenstruktur, die insbesondere eine Aggregation, weiter bevorzugt eine Liste von erkannten Fahrzeug-Subobjekten (mögliche Zahlenwerte 0,1, 2 und mehr) und weiter bevorzugt mindestens eine zugeordnete Subobjekt-Lokalisierung und/oder Ausnahme-Eigenschaft beinhaltet.

Wenn keine Ausnahmebeschaffenheit erkannt wird, kann davon ausgegangen werden, dass eine Standardkonfiguration vorliegt. Alternativ kann eine geordnete Datenstruktur für eine Fahrzeugkonfiguration vorgesehen sein, die entweder eine erkannte Ausnahmebeschaffenheit oder eine erkannte Standardkonfiguration definiert.

Ein Fahrzeug-Subobjekt kann bevorzugt ein an der Fahrzeugkontur angebrachtes Anbauteil und/oder ein Fahrzeugteil des zu behandelnden Fahrzeugs sein.

Zu einem erkannten Anbauteil wird bevorzugt ergänzend eine Anbauteil-Lokalisierung erfasst und weiter bevorzugt als Bestandteil der erkrankten Ausnahmebeschaffenheit definiert. Zu einem erkannten Anbauteil wird bevorzugt ergänzend eine Eigenschaft, insbesondere Ausnahme-Eigenschaft erfasst.

Zu einem erkannten Fahrzeugteil wird bevorzugt dessen Fahrzeugteil-Lokalisierung und/oder eine Ausnahme-Eigenschaft des Fahrzeugteils erkannt und weiter bevorzugt als ein Bestandteil der Ausnahmebeschaffenheit definiert.

Eine oder mehrere Ausnahme-Eigenschaften eines Fahrzeugteils oder eines Anbauteils können als für eine Fahrzeugbehandlung zulässig oder unzulässig definiert sein.

Auch eine erkannte Standardkonfiguration kann mindestens ein Fahrzeugteil und dessen Fahrzeugteil-Lokalisierung sowie gegebenenfalls eine Standard-Eigenschaft des Fahrzeugteils umfassen. Für ein Anbauteil kann als Standardkonfiguration erwartet sein, dass ein solches Anbauteil nicht vorhanden ist. Entsprechend können für ein positiv erkanntes Anbauteil die jeweiligen klassifizierbaren Zustände als (bevorzugt unterscheidbare) Ausnahme-Eigenschaften vorliegen.

Ein weiterer Aspekt der vorliegenden Offenbarung betrifft ein Steuerverfahren für eine Fahrzeugbehandlungsanlage, wobei das Steuerverfahren eine erkannte Ausnahmebeschaffenheit eines zu behandelnden Fahrzeugs bezieht, die insbesondere durch ein Objekterkennungsverfahren gemäß dem vorgenannten Aspekt ausgegeben sein kann, wobei das Steuerverfahren weiterhin eine Ablaufsteuerung umfasst, die auf Basis der bezogenen bzw. erkannten Ausnahmebeschaffenheit des zu behandelnden Fahrzeugs ein Behandlungsprogramm für die Fahrzeugbehandlung adaptiert und die Fahrzeugbehandlung startet.

Alternativ oder zusätzlich kann die Ablaufsteuerung eine laufende Fahrzeugbehandlung auf Basis einer (nachträglich) erkannten oder bezogenen Ausnahmebeschaffenheit des zu behandelnden Fahrzeugs eine laufende Fahrzeugbehandlung unterbrechen oder ein laufendes Behandlungsprogramm auf Basis der Ausnahmebeschaffenheit adaptieren und in geänderter Weise fortsetzen.

Es ist weiterhin möglich, dass die Ablaufsteuerung auf Basis einer erkannten Ausnahmebeschaffenheit den Start einer Fahrzeugbehandlung verhindert und/oder ein laufendes Behandlungsprogramm unterbricht oder beendet. Eine Unterbrechung oder Beendigung eines Behandlungsprogramms kann vorgesehen sein, wenn mindestens eine Ausnahme-Eigenschaft erkannt wird oder ist, die als unzulässig für die Fortsetzung einer Fahrzeugbehandlung definiert ist.

Die Ablaufsteuerung kann mindestens einen Kommandowert ausgeben, der an eine Behandlungsanlage kommunizierbar ist, wobei der Kommandowert eine angepasste Steuerung der Behandlungsanlage auf Basis der erkannten Ausnahmebeschaffenheit definiert, insbesondere eine Adaption eines Behandlungsprogramms. Die Ablaufsteuerung kann auf einer lokalen Datenverarbeitungseinrichtung an einer Behandlungsanlage, insbesondere auf einer Anlagensteuerung, oder auf einer entfernten Datenverarbeitungseinrichtung ausgeführt werden.

Eine Ausnahmebeschaffenheit kann als eine initiale Ausnahmebeschaffenheit vor einem Behandlungsbeginn erkannt, ausgegeben und/oder bezogen werden. Die Ausnahmebeschaffenheit kann alternativ oder zusätzlich als eine nachträgliche Ausnahmebeschaffenheit nach einem Behandlungsbeginn bzw. während einer laufenden Fahrzeugbehandlung erkannt, ausgegeben und/oder bezogen werden.

Mit anderen Worten kann in dem Objekterkennungsverfahren eine Zulässigkeitsklassifizierung zu einer erkannten Ausnahmebeschaffenheit ausgeführt werden. Die Zulässigkeitsklassifizierung kann insbesondere auf Basis mindestens eines Typs eines erkannten Fahrzeug-Subobjekts und/oder auf Basis mindestens einer erkannten Ausnahme-Eigenschaft eines Fahrzeug-Subobjekts ausgeführt werden.

Gemäß einem eigenständigen Merkmal, das mit jedem Aspekt der vorliegenden Offenbarung kombinierbar ist, kann eine erkannte Ausnahmebeschaffenheit als eine zulässige oder eine unzulässige Ausnahmebeschaffenheit klassifiziert sein oder werden. Eine Zulässigkeit oder Unzulässigkeit kann für bestimmte Fahrzeug-Subobjekte, bestimmte Ausnahme-Eigenschaften von Fahrzeug-Subobjekten oder bestimmte Subobjekt-Lokalisierungen vordefiniert sein, insbesondere durch eine Zulässigkeits-Datenbank. Die Zulässigkeits-Datenbank kann auf beliebige Weise direkt oder über eine Kommunikationsschnittstelle zugreifbar sein. Eine Zulässigkeits-Datenbank kann Bestandteil einer lokalen oder einer entfernten Datenverarbeitungseinrichtung sein, insbesondere Bestandteil einer Umfelderfassung oder Bestandteil einer Anlagensteuerung.

Eine Zulässigkeit einer Ausnahmebeschaffenheit kann vorliegen, wenn eine Fahrzeugbehandlung mit einer Adaption eines Behandlungsprogramms möglich ist. Die Zulässigkeit kann von der Ausstattung einer bestimmten Fahrzeugbehandlungsanlage, insbesondere von der Anzahl und Art der Behandlungsaggregate abhängig sein. Eine Unzulässigkeit einer Ausnahmebeschaffenheit kann vorliegen, wenn die Durchführung einer geplanten Fahrzeugbehandlung eine unzulässige parasitäre Folge hat (erwarten lässt) und/oder (an der jeweiligen Fahrzeugbehandlungsanlage) keine passende Adaption verfügbar ist.

Eine Klassifikation als zulässige oder unzulässige Ausnahmebeschaffenheit kann individuell für eine bestimmte Fahrzeugbehandlungsanlage erfolgen, insbesondere auf Basis der Ausstattung dieser Fahrzeugbehandlungsanlage.

Besonders bevorzugt ist vorgesehen, dass ein Verhindern eines Starts der Fahrzeugbehandlung auf Basis einer initialen Ausnahmebeschaffenheit, weiter insbesondere auf Basis einer initialen unzulässigen Ausnahmebeschaffenheit erfolgt.

Weiterhin ist bevorzugt vorgesehen, dass ein Adaptieren eines Behandlungsprogramms für die Fahrzeugbehandlung und ein Starten der Fahrzeugbehandlung auf Basis einer initialen Ausnahmebeschaffenheit, weiter insbesondere auf Basis einer initialen zulässigen Ausnahmebeschaffenheit erfolgt.

Weiterhin ist bevorzugt vorgesehen, dass ein Adaptieren eines laufenden Behandlungsprogramms und ein Fortsetzen der Fahrzeugbehandlung auf Basis einer nachträglichen Ausnahmebeschaffenheit, weiter insbesondere auf Basis einer nachträglichen zulässigen Ausnahmebeschaffenheit erfolgt.

Weiterhin ist bevorzugt vorgesehen, dass ein Unterbrechen einer laufenden Fahrzeugbehandlung auf Basis einer nachträglichen Ausnahmebeschaffenheit, weiter insbesondere auf Basis einer nachträglichen unzulässigen Ausnahmebeschaffenheit erfolgt.

Ein Objekterkennungsverfahren und ein Steuerverfahren können durch eine gemeinsame Datenverarbeitungseinrichtung oder durch getrennte Datenverarbeitungseinrichtungen implementiert oder ausgeführt sein. Die ein oder mehreren Datenverarbeitungseinrichtungen können eine beliebige Ausbildung haben. Sie können Bestandteil einer Anlagensteuerung und/oder einer Fahrzeugbehandlungsanlage sein. Alternativ oder zusätzlich kann eine entfernte Datenverarbeitungseinrichtung vorgesehen sein, die nicht Bestandteil einer Fahrzeugbehandlungsanlage ist, und die durch eine Kommunikationsschnittstelle mit einer Fahrzeugbehandlungsanlage verbunden ist. Durch die Kommunikationsschnittstelle können Ein- und Ausgangsdaten des Objekterkennungsverfahrens und/oder des Steuerverfahrens zwischen der Fahrzeugbehandlungsanlage und der entfernten Datenverarbeitungseinrichtung ausgetauscht sein oder werden. Die ausgetauschten Daten können insbesondere Umfelderfassungsdaten sein, eine erkannte Ausnahmebeschaffenheit und/oder Kommandowerte zur Steuerung der Durchführung einer Fahrzeugbehandlung. Kommandowerte können weiter insbesondere für das Verhindern eines Starts einer Fahrzeugbehandlung, für das Adaptieren eines Behandlungsprogramms und das Starten der Fahrzeugbehandlung, für das Unterbrechen einer laufenden Fahrzeugbehandlung und/oder für das Adaptieren eines laufenden Behandlungsprogramms und das Fortsetzen der Fahrzeugbehandlung vorgesehen sein.

Ein weiterer Aspekt der vorliegenden Offenbarung betrifft ein Softwareprodukt für eine Fahrzeugbehandlungsanlagensteuerung. Das Softwareprodukt ist bevorzugt auf einem Datenträger gespeichert oder über eine Datenschnittstelle übertragen. Es umfasst Anweisungen, die bei einer Implementierung auf einer (lokalen oder entfernten) Datenverarbeitungseinrichtung ein Objekterkennungsverfahren und/oder ein Steuerverfahren gemäß der vorliegenden Offenbarung ausführen.

Ein weiterer Aspekt der vorliegenden Offenbarung betrifft eine Anlagensteuerung für eine Fahrzeugbehandlungsanlage (Fahrzeugbehandlungsanlagensteuerung). Die Anlagensteuerung kann als eine Steuerungsvorrichtung, insbesondere in Form einer Datenverarbeitungseinrichtung ausgebildet sein. Die Anlagensteuerung umfasst eine Umfelderfassung und/oder eine Ablaufsteuerung. Die Umfelderfassung und/oder die Ablaufsteuerung können jeweils für sich (getrennt) oder gemeinsam (kombiniert) ausgebildet sein. Die Umfelderfassung kann eine Umfelderfassungsvorrichtung sein. Die Ablaufsteuerung kann eine Ablaufsteuerungsvorrichtung sein.

Die Umfelderfassung bevorzugt zur Ausführung eines Objekterkennungsverfahrens gemäß der vorliegenden Offenbarung vorgesehen und ausgebildet.

Die Ablaufsteuerung ist bevorzugt zur Ausführung eines Steuerverfahrens gemäß der vorliegenden Offenbarung vorgesehen und ausgebildet.

Alternativ kann die Umfelderfassung oder die Ablaufsteuerung eine andere Ausbildung haben.

Die Umfelderfassung bezieht Umfelderfassungsdaten von mindestens einem Sensor, wobei die Umfelderfassungsdaten zumindest zeitweise eine Repräsentation eines zu behandelnden Fahrzeugs umfassen. Die Umfelderfassung kann direkt oder über eine (Fern-) Kommunikationsschnittstelle mit dem mindestens einen Sensor verbunden sein.

Die Ablaufsteuerung steuert die Behandlungsaggregate der Fahrzeugbehandlungsanlage zur Durchführung einer Fahrzeugbehandlung. Die Ablaufsteuerung kann direkt oder über eine (Fern-) Kommunikationsschnittstelle mit der Behandlungsanlage und/oder mindestens einem Behandlungsaggregat verbunden sein.

Es ist bevorzugt vorgesehen, dass die Umfelderfassung ein trainiertes Kl-Modul umfasst, das innerhalb der momentanen Umfelderfassungsdaten eine Beschaffenheit des zu behandelnden Fahrzeugs analysiert und eine für den Behandlungseingriff relevante Ausnahmebeschaffenheit des Fahrzeugs erkennt.

Weiterhin ist bevorzugt vorgesehen, dass die erkannte Ausnahmebeschaffenheit des Fahrzeugs mindestens ein Fahrzeug-Subobjekt und weiterhin bevorzugt dessen Subobjekt-Lokalisierung und/oder eine Ausnahme-Eigenschaft des Fahrzeug-Subobjekts in computerlesbarer Form definiert, wobei die erkannte Ausnahmebeschaffenheit bevorzugt durch eine geordnete Datenstruktur gebildet ist.

Weiterhin ist bevorzugt vorgesehen, dass die Ablaufsteuerung eine vorgesehene Fahrzeugbehandlung durch die Fahrzeugbehandlungsanlage auf Basis der erkannten Ausnahmebeschaffenheit des Fahrzeugs steuert. Die Steuerung kann direkt oder mittelbar über Kommandowerte erfolgen.

Eine bevorzugte Ausführung sieht vor, dass die Umfelderfassung und/oder die Ablaufsteuerung durch mindestens eine lokale Datenverarbeitungseinrichtung gebildet sind oder ausgeführt werden. Alternativ kann zumindest ein Teil der Umfelderfassung oder der Ablaufsteuerung durch eine entfernte Datenverarbeitungseinrichtung gebildet sein oder ausgeführt werden.

Die Ablaufsteuerung kann bevorzugt auf Basis einer erkannten oder bezogenen Ausnahmebeschaffenheit des zu behandelnden Fahrzeugs ein Behandlungsprogramm für die Fahrzeugbehandlung adaptieren und starten oder ein laufendes Behandlungsprogramm der Fahrzeugbehandlung adaptieren und fortsetzen.

Alternativ oder zusätzlich können das Verhindern eines Starts der Fahrzeugbehandlung und/oder die Unterbrechung einer laufenden Fahrzeugbehandlung vorgesehen sein.

Es ist besonders bevorzugt vorgesehen, dass die Ablaufsteuerung eine vorgesehene Fahrzeugbehandlung auf Basis einer (erkannten / klassifizierten) Zulässigkeit einer erkannten Ausnahmebeschaffenheit steuert.

In den Unteransprüchen sind weitere vorteilhafte Ausbildungen der Erfindung angegeben.

Die Erfindung ist in den Zeichnungen beispielhaft und schematisch dargestellt. Diese zeigen:
- Figur 1, 2:: eine Fahrzeugbehandlungsanlage mit einer Anlagensteuerung gemäß der vorliegenden Offenbarung in einer Schrägansicht und einer Seitenansicht;
- Figur 3:: Beispieldarstellungen von Umfelderfassungsdaten als ein Gesamt-Umfelddatensatz sowie als ein Fahrzeug-Umfelddatensatz und ein Fahrzeug-Subobjekts-Umfelddatensatz;
- Figur 4:: eine beispielhafte Darstellung einer Umfelderfassung mit einer möglichen Ausbildung eines KI-Moduls.

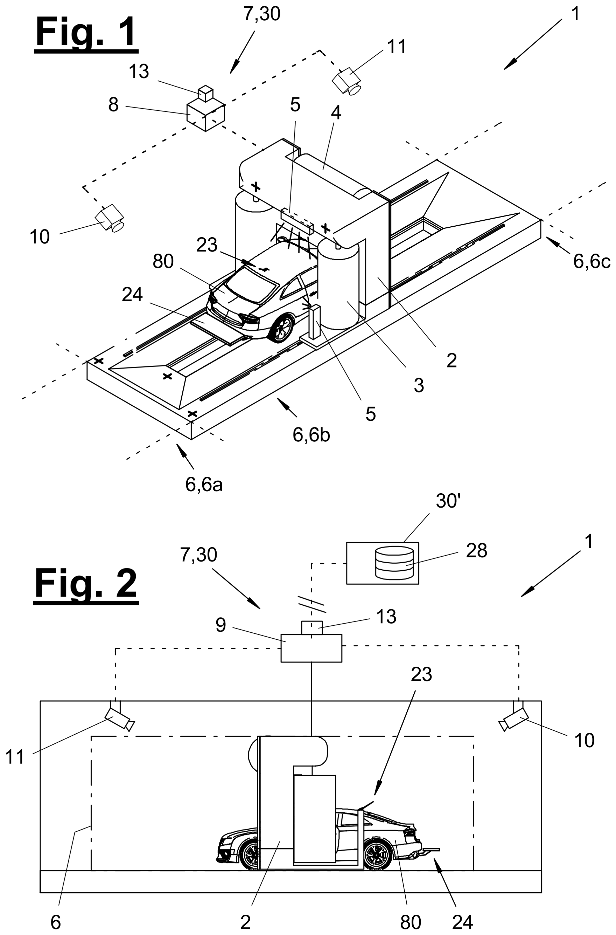

Figuren 1 und 2 zeigen eine Fahrzeugbehandlungsanlage 1. In dem Beispiel ist die Fahrzeugbehandlungsanlage 1 als eine automatische Waschanlage ausgebildet. Die Waschanlage umfasst in dem gezeigten Beispiel ein bewegliches Portal 2, das gegenüber einem Behandlungsbereich 6A gesteuert bewegbar ist. An dem Portal ist eine Mehrzahl von Behandlungsaggregaten 3,4,5 angeordnet. Das Portal 2 ist eine mögliche Ausbildung eines Aggregatträgers, zur Unterstützung und gegebenenfalls gesteuerten Bewegung mindestens eines Behandlungsaggregats 3, 4,5. Anstelle eines Portals 2 können beliebige andere Ausbildungsformen eines Aggregatträgers in einfacher oder mehrfacher Ausführung vorgesehen sein. Mit anderen Worten umfasst die Fahrzeugbehandlungsanlage mindestens einen Aggregatträger 2 mit mindestem einem Behandlungsaggregat 3,4,5.

Die Fahrzeugbehandlungsanlage kann optional eine Bewegungsvorrichtung für mindestens ein zu behandelndes Fahrzeug 80, insbesondere eine Schleppeinrichtung aufweisen.

Es ist mindestens ein Sensor 10,11 vorgesehen, der Umfelderfassungsdaten 9 erfasst. Der mindestens eine Sensor 10,11 kann eine beliebige Ausbildung haben. Er kann insbesondere ein bildgebender Sensor sein, weiter insbesondere eine Kamera. Der mindestens seine Sensor 10,11 kann alternativ oder zusätzlich Tiefeninformationen, insbesondere Abstandswerte erfassen. Er kann insbesondere als eine 3D-Kamera ausgebildet sein.

Der mindestens eine bildgebende Sensor ist bevorzugt kalibriert. Er kann weiter bevorzugt intrinsisch und/oder extrinsisch kalibriert sei oder werden. Eine intrinsische Kalibrierung bestimmt die innenliegenden Abbildungsparameter des Sensors, insbesondere einer Kamera. Eine intrinsische Kalibrierung bestimmt insbesondere Brennweite, Hauptpunktlage, Pixel-Skalierung und/oder Linsenverzerrungsparameter.

Eine intrinsische Kalibrierung erfolgt beispielsweise mittels eines planaren Kalibrierziels (Schachbrettmuster), wobei die Parameter anhand mehrerer Ansichten des Musters gemäß der etablierten Methode nach Zhang geschätzt werden.

Eine extrinsische Kalibrierung bestimmt die räumliche Position und Orientierung der Kamera relativ zu einem festen Referenzkoordinatensystem bzw. relativ zu der Fahrzeugbehandlungsanlage. Für eine extrinsische Kalibrierung werden beispielsweise im Kamerabild ArUco-Marker erkannt, deren 2D-Bildpositionen und bekannte 3D-Markergeometrien als Referenz dienen. Aus den zugehörigen 2D-3D-Korrespondenzen werden beispielsweise mittels PnP-Verfahren (Perspective-n-Point) die Rotation und Translation des Sensors (der Kamera) relativ zum Marker-Koordinatensystem berechnet.

Die Umfelderfassungsdaten 9 können direkt erfasste Daten von einem Sensor 10,11 oder fusionierte Daten von einer Mehrzahl von Sensoren sein.

Besonders bevorzugt beinhalten die Umfelderfassungsdaten eine Vielzahl von Datenelementen in einer strukturierten Anordnung, besonders bevorzugt in einer Rasteranordnung. Beispielhaft können die Umfelderfassungsdaten 9 Datenelemente in einer zweidimensionalen oder dreidimensionalen Struktur umfassen, beispielsweise in einem Array oder einem Vektor. Ein Datenelement kann einen oder mehrere Kanäle umfassen. Ein Kanal kann für eine bestimmte Informationsart vorgesehen sein. Beispielsweise kann ein erster Kanal für einen Helligkeitswert und ein zweiter Kanal für einen Entfernungswert vorgesehen sein. Wiederum alternativ kann ein erster Kanal für einen ersten Farbwert, ein zweiter Kanal für einen zweiten Farbwert und etwaig mindestens ein weiterer Kanal für einen entsprechend weiteren Farbwert vorgesehen sein.

In der nachfolgenden Erläuterung wird beispielhaft davon ausgegangen, dass die Umfeld Erfassungsdaten 9 als Bilddaten in einer zweidimensionalen Datenstruktur vorliegen. Die Bilddaten können als Pixel mit einem oder mehreren Kanälen hinterlegt sein, insbesondere mit einer RGB-Kanalaufteilung und etwaig zusätzlich einem Entfernungswert-Kanal.

Der mindestens eine Sensor 10,11 ist mit einem Erfassungsbereich auf das Anlagenumfeld 6 gerichtet. Das Anlagenumfeld 6 kann bevorzugt einen Behandlungsbereich 6a und etwaig zusätzlich einen Zufahrtsbereich 6b und/oder einen Ausfahrtbereich 6c umfassen.

Bevorzugt sind mindestens zwei Sensoren 10,11 mit einem jeweiligen Erfassungsbereich aus unterschiedlichen Richtungen auf das Anlagenumfeld 6 und insbesondere einen zumindest überlappenden gemeinsamen Abschnitt des Anlagenumfelds 6 gerichtet.

Es kann eine Triangulation eines 3D-Punktes aus Erfassungspunkten von bildgebenden Sensor(en) erfolgen, insbesondere aus Bildpunkten und Kameraparametern. Bei der Triangulation wird bevorzugt aus mindestens zwei korrespondierenden Bildpunkten, sowie den zugehörigen intrinsischen und extrinsischen Kameraparametern, eine dreidimensionale Position dieses Punktes berechnet. Der 3D-Punkt ergibt sich insbesondere aus einem Best-Fit-Schnittpunkt der von Sensoren (Kameras) definierten Projektionsstrahlen im Raum.

In einer Ausführungsform erfolgt ein Optimieren der extrinsischen Kameraparameter durch Bundle Adjustment. Mit Bundle Adjustment (mehrdimensionales Optimierungsverfahren), können ausgehend von initialen Kameraparametern die extrinsischen Parameter (Rotation und Translation) durch Minimierung der über mehrere Bilder aufsummierten Reprojektionsfehler verfeinert werden. Bevorzugt werden bekannte 3D-Punkte in einem (jedem) Optimierungsschritt mit den aktuellen Kameraparametern rückprojiziert, und die Kameraparameter werden iterativ so angepasst, dass die rückprojizierten Bildpunkte bestmöglich mit den tatsächlich detektierten Bildpunkten übereinstimmen.

In dem Ausführungsbeispiel gemäß Figuren 1 und 2 ist eine Anlagensteuerung 7, insbesondere eine Fahrzeugbehandlungsanlagensteuerung 7 vorgesehen, die dazu vorgesehen und ausgebildet ist, für sich allein oder durch entsprechende Unterkomponenten ein Objekterkennungsverfahren und/oder ein Steuerverfahren gemäß der vorliegenden Offenbarung auszuführen. Die Ausführung der verschiedenen Schritte oder Teilschritte dieser Verfahren kann auf beliebige Weise auf eine oder mehrere Datenverarbeitungseinrichtungen 30,30' verteilt sein, wobei die ein oder mehreren Datenverarbeitungseinrichtungen 30,30' durch mindestens eine Kommunikationsschnittstelle verbunden sein können.

Eine erste bevorzugte Ausführung sieht vor, dass die Fahrzeugbehandlungsanlagensteuerung 7 eine lokale Datenverarbeitungseinrichtung 30 umfasst, welche die Umfelderfassung 8 und/oder die Ablaufsteuerung 13 verkörpert oder implementiert.

Eine Alternative Ausführungsvariante sieht vor, dass zumindest ein Teil der Umfelderfassung und/oder der Ablaufsteuerung durch eine entfernte Datenverarbeitungseinrichtung 30' verkörpert oder implementiert ist.

Zwischen einer lokalen Datenverarbeitungseinrichtung 30 und einer entfernten Datenverarbeitungseinrichtung 30' können mindestens ein Element der folgenden Gruppe in beliebiger Richtung ausgetauscht werden, umfassend Umfelderfassungsdaten 9, eine erkannte Ausnahmebeschaffenheit KS und mindestens einen Kommandowert zur Steuerung der Durchführung einer Fahrzeugbehandlung.

In der nachfolgenden Beschreibung wird beispielhaft davon ausgegangen, dass alle Verfahrensschritte lokal ausgeführt werden.

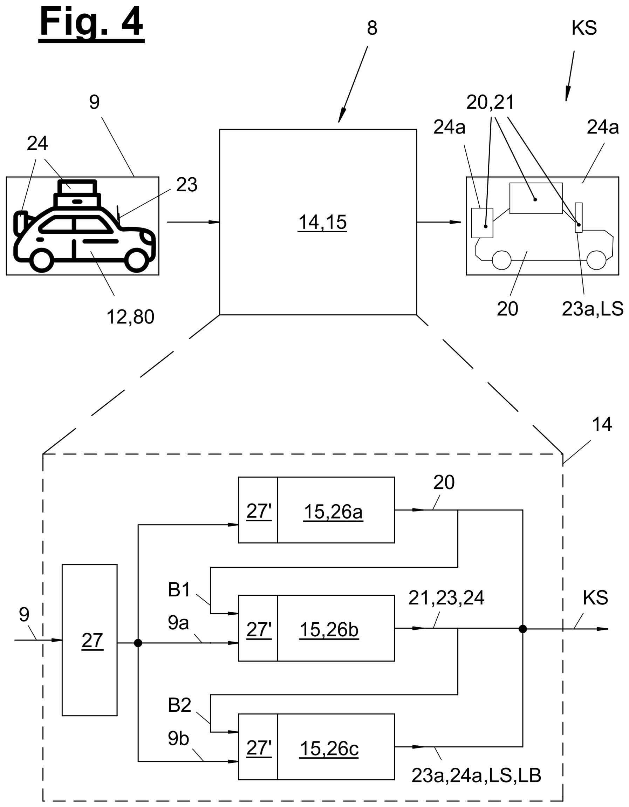

Die Umfelderfassung 8 umfasst bevorzugt ein trainiertes KI-Modul 14, dass innerhalb der momentanen Umfelderfassungsdaten 9 eine Beschaffenheit des zu behandelnden Fahrzeugs 80 analysiert und eine für den Behandlungseingriff relevante Ausnahmebeschaffenheit KS des Fahrzeugs erkennt. Das KI-Modul 14 kann eine beliebige Ausbildung haben. Verschiedene vorteilhafte Ausbildungsarten für ein KI-Modul 14 werden weiter unten unter Bezugnahme auf Figur 4 erläutert.

Die erkannte Ausnahmebeschaffenheit KS des Fahrzeugs definiert mindestens ein Fahrzeug-Subobjekt 21 und bevorzugt weiterhin dessen Subobjekt-Lokalisierung 22 und/oder eine Ausnahme-Eigenschaft LS des Fahrzeug-Subobjekts 21 in computerlesbarer Form.

Ein Fahrzeug-Subobjekt 21 und eine Subobjekt-Lokalisierung 22 und/oder eine Ausnahme-Eigenschaft LS sind bevorzugt Elemente der nachfolgenden Liste:
Ein an der Fahrzeugkontur angebrachtes Anbauteil 24 und bevorzugt dessen Anbauteil-Lokalisierung 24a;
Ein Fahrzeugteil 23 und optional dessen Fahrzeugteil-Lokalisierung 23a und/oder eine Ausnahme-Eigenschaft LS des Fahrzeugteils 23.

Ein Fahrzeugteil 23 des zu behandelnden Fahrzeugs 80 und eine optional zugeordnete Ausnahme-Eigenschaft LS können bevorzugt Elemente der nachfolgenden Liste sein:
- Eine Anhängerkupplung mit Ausnahme-Eigenschaft: ausgeklappt;
- Eine Anhängerkupplung mit Ausnahme-Eigenschaft:
   Schrägstellung;
- Ein Spoiler mit Ausnahme-Eigenschaft: ausgefahren;
- Eine Antenne mit Ausnahme-Eigenschaft: ausgefahren;
- Eine Kühlerfigur mit Ausnahme-Eigenschaft: (unzulässig) hoher Überstand;
- Ein Ladeanschluss mit Ausnahme-Eigenschaft: Ladekabel eingesteckt;
- Eine Klappe mit Ausnahme-Eigenschaft: Klappe geöffnet;
- Ein Deckel mit Ausnahme-Eigenschaft: Deckel geöffnet;
- Eine Fahrzeug-Türe mit Ausnahme-Eigenschaft: Türe geöffnet;
- Ein Fahrzeug-Fenster mit Ausnahme-Eigenschaft: Fenster geöffnet;
- Ein Karosseriespalt mit Ausnahme-Eigenschaft: Spalt geöffnet;
- Ein Scheibenwischer mit Ausnahme-Eigenschaft:
   Scheibenwischer in aufrechter Position;
- Ein Scheibenwischer mit Ausnahme-Eigenschaft:
   Scheibenwischer in Bewegung;
- Ein Scheibenwischer mit Ausnahme-Eigenschaft: von Scheibe abgehoben;
- Ein Schweller mit Ausnahme-Eigenschaft: Fahrzeug tiefergelegt;
- Ein Schweller mit Ausnahme-Eigenschaft: Fahrzeug höhergelegt;
- Ein Kotflügel mit Ausnahme-Eigenschaft: Kotflügel-Überstand;
- Ein Rad mit Ausnahme-Eigenschaft: Rad in Kurvenfahrt-Stellung;
- Ein Fahrzeug-Spiegel (81) mit Ausnahme-Eigenschaft: Spiegel ausgeklappt.

Ein Anbauteil und/oder ein klassifizierbarer Anbauteil-Typ kann ein Element der nachfolgenden Liste sein:
- Ein Dachträger;
- Ein Heckträger;
- Eine Transportbox;
- Ein Ersatzrad;
- Eine Anhängerkupplung;
- Ein Informationsschild (Taxischild);
- Eine Signalbeleuchtung, beispielsweise eine Blaulichtanlage (eines Einsatzfahrzeugs);
- Ein Fahrrad;
- Eine Skiausrüstung;
- Ein Snowboard;
- Ein Dachzelt;
- Eine Leiter;
- Ein Spoiler;
- Eine Fensterspaltkappe;
- Ein Boot;

Weiter unten sind Handlungen erläutert, die etwaig für eine bestimmte erkannte Ausnahmebeschaffenheit (KS) vorgesehen sein können, insbesondere Handlungen zur Adaption eines Behandlungsprogramms bei Vorliegen einer zulässigen erkannten Ausnahmebeschaffenheit und/oder Handlungen zur Betriebsunterbrechung bei Vorliegen einer unzulässigen erkannten Ausnahmebeschaffenheit.

In dem Beispiel von Figur 1 und 2 ist an dem zu behandelnden Fahrzeug 80 ein Gepäckträger als ein Anbauteil 24 im Heckbereich gezeigt und das zu behandelnde Fahrzeug 80 umfasst eine ausfahrbare Antenne als ein Fahrzeugteil 23 mit der Ausnahme-Eigenschaft LS "Antenne ausgefahren".

Die Umfelderfassung 8 und insbesondere das KI-Modul 14 ist bevorzugt dazu ausgebildet und/oder trainiert, für ein Fahrzeug-Subobjekt 21, insbesondere für ein Fahrzeugteil 23, mindestens eine Ausnahme-Eigenschaft LS zu klassifizieren und weiter bevorzugt auszugeben. Die Ausnahme-Eigenschaft LS kann insbesondere für die Durchführung einer Fahrzeugbehandlung maßgeblich sein und weiter insbesondere in Abgrenzung zu einer Standard-Eigenschaft LB eines / dieses Fahrzeugteils definiert sein.

Eine besonders bevorzugte Ausführung kann vorsehen, dass bestimmte Ausnahme-Eigenschaften LS als zulässig für eine Fahrzeugbehandlung und andere Ausnahme-Eigenschaften LS als unzulässig für eine Fahrzeugbehandlung definiert sind.

Mit anderen Worten umfasst die Umfelderfassung und/oder eine Zulässigkeits-Datenbank bevorzugt eine Liste von vordefinierten Fahrzeug-Subobjekten 21, insbesondere Fahrzeugteilen 23, und zuordenbaren Ausnahme-Eigenschaften LS. Die Liste kann erweiterbar sein. Bevorzugt kann die Liste weiterhin mindestens eine zuordenbare Standard-Eigenschaft LB umfassen. Alternativ oder zusätzlich kann für mindestens eine und bevorzugt jede Ausnahme-Eigenschaft LS eine Zulässigkeit für eine Fahrzeugbehandlung definiert sein.

Mit anderen Worten ist bevorzugt eine Ausnahme-Eigenschaft LS in Abgrenzung zu einer Standard-Eigenschaft LB eines Fahrzeugteils 23 definiert.

Die Umfelderfassung 8 und insbesondere das KI-Modul 14 kann bevorzugt dazu ausgebildet und/oder trainiert sein, das Vorhandensein mindestens eines Anbauteils 24 zu erkennen und insbesondere ein erkanntes Anbauteil mit einem bestimmten Anbauteil-Typ (TA) zu klassifizieren. Das Anbauteil 24 und/oder der klassifizierte Anbauteil-Typ kann bevorzugt ausgegeben werden, insbesondere als ein Bestandteil einer erkannten Ausnahmebeschaffenheit KS.

Die Umfelderfassung 8 und insbesondere das KI-Modul 14 ist bevorzugt dazu ausgebildet, eine kaskadierte Erkennung durchzuführen. Die Kaskadierung der Erkennung kann auf beliebige Weise ausgebildet sein. Eine bevorzugte Ausführung sieht vor, dass zunächst innerhalb der momentanen Umfelderfassungsdaten 9 ein Fahrzeug-Objekt 20 erkannt wird und nachfolgend innerhalb eines Teils der Umfelderfassungsdaten 9, die dem Fahrzeug-Objekt 20 zuordenbar sind, ein Fahrzeug-Subobjekt 21 erkannt wird. Zeitparallel oder bevorzugt nachfolgend kann innerhalb eines Teils der Umfelderfassungsdaten 9, die einem erkannten Fahrzeug-Subobjekt 21 zuordenbar sind, eine Eigenschaft des Fahrzeug-Subobjekts, insbesondere eine Ausnahme-Eigenschaft LS erfasst werden und/oder es kann eine Subobjekt-Lokalisierung 22 erfasst werden.

Durch eine kaskadierte Erkennung kann in besonders ressourceneffizienter Weise eine schnelle Erkennung einerseits von Fahrzeug-Subobjekten und andererseits von Ausnahme-Eigenschaften und/oder Subobjekt-Lokalisierung erfolgen.

Die Umfelderfassung 8 und insbesondere das KI-Modul 14 kann dazu ausgebildet sein, die Repräsentation 12 eines zu behandelnden Fahrzeugs 80 zu erkennen und in den momentanen Umfelderfassungsdaten 9 denjenigen Datenteil als einen Fahrzeug-Umfelddatensatz 9a zu definieren, in denen die Repräsentation 12 des zu behandelnden Fahrzeugs vorliegt. Dies kann insbesondere durch Selektion des Datenteils stattfinden oder eine Selektion des Datenteils ermöglichen.

Die Umfelderfassung 8 und insbesondere das KI-Modul 14 ist bevorzugt dazu ausgebildet, ein Fahrzeug-Subobjekt 21 zu erkennen und in den momentanen Umfelderfassungsdaten 9 denjenigen Datenteil als einen Fahrzeug-Subobjekt-Umfelddatensatz 9b zu definieren, in dem die Repräsentation des zugehörigen Fahrzeug-Subobjekts 21 vorliegt, insbesondere die Repräsentation eines Fahrzeugteils 22 oder eines Anbauteils 23.

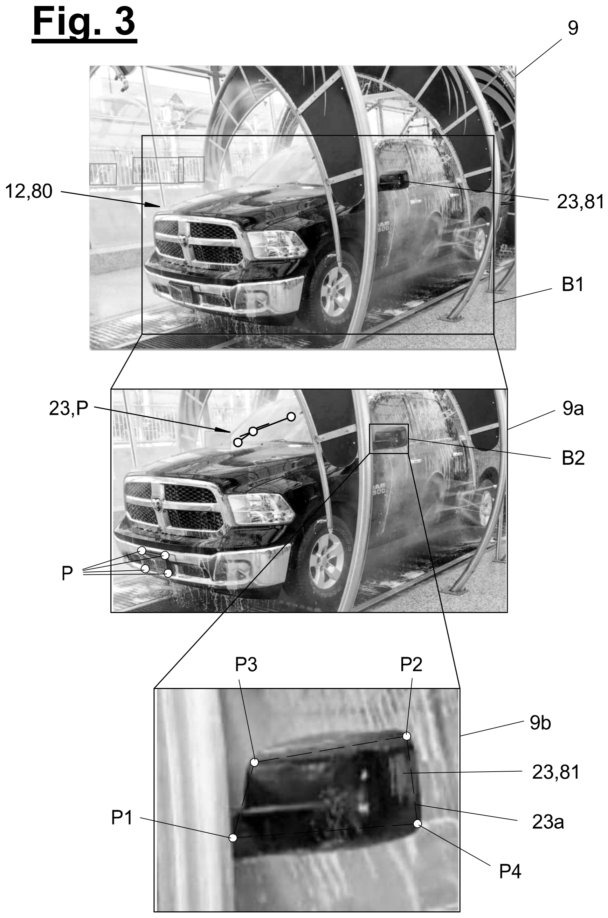

Figur 3 zeigt beispielhaft im oberen Bereich ein Bild, das momentanen Umfelderfassungsdaten 9 entspricht. Darin ist eine Repräsentation 12 eines Fahrzeugs 80 umfasst. Das Fahrzeug 80 kann als ein Fahrzeug-Objekt 20 erkannt werden.

Die dem Fahrzeug-Objekt 20 zuordenbaren Teile der Umfelderfassungsdaten 9 können als ein separater Datenteil definiert werden, insbesondere als ein Fahrzeug-Umfelddatensatz 9a.

Die Festlegung eines Fahrzeug-Umfelddatensatzes 9a kann auf beliebige Weise erfolgen.

Eine erste bevorzugte Ausführung sieht die Definition einer Fahrzeug Bounding-box B1 innerhalb der momentanen Umfelderfassungsdaten 9 vor, wobei die Bounding-Box insbesondere als eine achsparallele Bounding-box oder als eine orientierte Bounding-box definiert sein kann. Figur 3 illustriert eine achsparallele Boudning-box, deren Kanten parallel zu den Achsen der Umfelderfassungsdaten 9, hier der zweidimensionalen Bilddatei ausgerichtet sind.

Eine Alternative oder zusätzliche Ausführung sieht ein Tracking einer Fahrzeug Bounding-box B1 innerhalb vorhergehender und momentaner Umfelderfassungsdaten 9 vor, weiter insbesondere als eine achsparallele Bounding -box oder als eine orientierte Bounding-box.

Eine wiederum alternative oder zusätzliche Ausführung sieht die Durchführung einer semantischen Segmentation der Umfelderfassungsdaten vor. Bei der semantischen Segmentation kann für eine Mehrzahl und insbesondere alle Datenelemente der momentanen Umfelderfassungsdaten 9 festgelegt werden, ob sie zum Szenenhintergrund oder einem Fahrzeugobjekt 20 gehören.

Gemäß einem Beispiel kann der Fahrzeug-Umfelddatensatz 9a ausschließlich diejenigen Datenelemente umfassen, die dem Fahrzeugobjekt zugeordnet sind, oder etwaig zusätzlich Binnen-Datenelemente, die zur Bildung einer zusammenhängenden Datenelementgruppe ergänzbar sind.

Alternativ kann ein Fahrzeug-Umfelddatensatz 9a durch Ausschluss solcher Datenelemente erzeugt werden, die in bevorzugt direkter Erstreckung zwischen einem Rand der Umfelderfassungsdaten 9 und einer Gruppe von Datenelementen liegen, die dem Fahrzeugobjekt zugeordnet sind. Wiederum alternativ oder zusätzlich kann ein Fahrzeug-Umfelddatensatz 9a durch Ausschluss solcher Datenelemente definiert werden, die dem Hintergrund zugeordnet sind.

Figur 4 zeigt exemplarisch ein Beispiel eines Kl-Moduls 14. Der Umfelderfassung 8 und insbesondere dem KI-Modul 14 werden momentane Umfelderfassungsdaten 9 zugeführt. Die Umfelderfassungsdaten 9 können zumindest zeitweise eine Repräsentation eines zu behandelnden Fahrzeugs 80 und weiterhin mindestens eine Repräsentation eines Fahrzeugteils 23 und/oder mindestens eine Repräsentation eines Anbauteils 24 umfassen. Die Umfelderfassung 8 und insbesondere das KI-Modul 14 kann eine erkannte Ausnahmebeschaffenheit KS ausgeben. Die Ausnahmebeschaffenheit KS kann (bevorzugt mindestens ein erkanntes Fahrzeug-Subobjekt 21 und weiterhin bevorzugt dessen Subobjekt-Lokalisierung 22 und/oder eine Ausnahme-Eigenschaft LS des Fahrzeug-Subobjekts 21 umfassen.

In dem Beispiel von Figur 4 wird ein Scheibenwischer als ein Fahrzeugteil 23 erfasst. Weiterhin kann ein Gepäckträger am Dach und/oder ein Gepäckträger am Heck beispielhaft als ein Anbauteil 24 vorliegen, der erfasst wird.

Das KI-Modul 14 umfasst bevorzugt mindestens ein neuronales Netz 15.

Gemäß einer bevorzugten Ausführung kann das KI-Modul 14 als ein Erkennungs-Netzwerk 25 mit einer Mehrzahl an Subnetzen 26a, 26b, 26c ausgebildet sein. Weiter bevorzugt können mindestens zwei Subnetze jeweils dedizierte eine Teilaufgabe der Erkennung einer Ausnahmebeschaffenheit KS ausführen.

Gemäß einem Beispiel kann ein erstes Subnetz 26a, 26b ein Zwischenergebnis der Erkennung, beispielsweise die Erkennung eines Fahrzeugobjekt 20 und/oder die Definition einer Fahrzeug Bounding-box B1 an ein anderes Subnetz 26b, 26c übergeben. Alternativ kann auf eine solche Übergabe von Zwischenergebnissen verzichtet werden oder es kann eine andere Übergabe von Zwischenergebnissen vorgesehen sein.

Das KI-Modul 14 umfasst bevorzugt mindestens einen Filterabschnitt 27,27', der Features in den zugeführten Umfelderfassungsdaten 9 ermittelt. Der Filterabschnitt 27,27' kann ein oder mehrfach vorhanden sein und eine beliebige Ausbildung haben. Bevorzugt umfasst ein Filterabschnitt 27,27' mehrere verkettete Filterebenen.

Das mindestens eine neuronale Netz 15 kann gemäß einer bevorzugten Ausführung für sich allein oder in Zusammenwirken mit mindestens einem Filterabschnitt 27,27' als ein faltendes neuronales Netz (convolutional neural network) ausgebildet sein.

In dem Beispiel von Figur 4 liegen mindestens zwei Subnetze 26a, 26b vor, die mit einem gemeinsamen Teil des Filterabschnitts 27 verbunden sind, und/oder, die gemeinsam die ermittelten Features eines Filterabschnitts 27 verarbeiten.

Ein erstes neuronales Netz 15 bzw. ein erstes Subnetz 26a kann für die Erkennung eines zu behandelnden Fahrzeugs 80 ausgebildet sein. Es kann insbesondere ein Fahrzeugobjekt-Identifikator sein. Ein weiteres und bevorzugt separates neuronales Netz 15 kann für die Erkennung eines Fahrzeug-Subobjekts 21 vorgesehen sein. Es kann insbesondere ein Fahrzeug-Subobjekt-Identifikator 26b sein.

Das (trainerte) Kl-Modul, bzw. ein weiteres und bevorzugt separates neuronales Netz 15 oder Subnetz 26c kann für die Ermittlung einer Subobjekt-Lokalisierung 22, insbesondere eine Fahrzeugteil-Lokalisierung 23a und/oder eine Anbauteil-Lokalisierung 24a vorgesehen sein.

Alternativ oder zusätzlich kann das KI-Modul 14, bzw. ein bevorzugt separates neuronales Netz 15, insbesondere ein Subnetz 26c für die Klassifizierung einer Ausnahme-Eigenschaft LS und/oder einer Standard-Eigenschaft LW vorgesehen sein.

Gemäß einer bevorzugten Ausführung kann vorgesehen sein, dass das KI-Modul 14 mindestens ein Element aus der Gruppe von Objekt-Identifikator, Zustands-Klassifikator, Lage-Schätzer, Ausdehnungs-Schätzer umfasst. Wobei das mindestens eine Element weiter insbesondere durch eine separate Struktur des KI-Moduls 14 gebildet ist, insbesondere durch ein separates neuronales Netz oder ein Subnetz 26a, 26b, 26c.

Gemäß einer weiteren Detaillierung kann das mindestens eine Element sein:
- Mindestens einen Fahrzeugobjekt-Identifikator; UND/ODER
- Mindestens einen Fahrzeug-Subobjekt-Identifikator, insbesondere einen Anbauteil-Identifikator und/oder einen Fahrzeugteil-Identifikator; UND/ODER
- einen keypoint-Identifikator; UND/ODER
- einen Eigenschaft-Klassifikator; UND/ODER
- einen Subobjekt-Lage-Schätzer; UND/ODER
- einen Subobjekt-Ausdehnungs-Schätzer.

Eine bevorzugte Ausführung sieht vor, dass die Erkennung eines Fahrzeug-Subobjekts 21 (ausschließlich) innerhalb eines Fahrzeug-Umfelddatensatz 9a erfolgt.

In dem Beispiel von Figur 3 ist als mittlere Darstellung ein Ausschnitt derjenigen Bilddaten, in denen das zu behandelnde Fahrzeug 80 repräsentiert ist, als ein Fahrzeug-Umfelddatensatz 9a gezeigt.

Eine bevorzugte Ausführung sieht vor, dass die Umfelderfassung 8 und insbesondere das KI-Modul 14, weiter insbesondere ein Fahrzeug-Identifikator dazu ausgebildet ist, die Repräsentation 12 des zu behandelnden Fahrzeugs 80 zu erkennen und den Fahrzeug-Umfelddatensatz 9a zu definieren sowie als Zwischenergebnis weiterzugeben.

In dem Beispiel von Figur 3 werden durch die Definition der Fahrzeug Bounding-box B1 Teile der momentanen Umfelderfassungsdaten 9 selektiert und als die Fahrzeug-Umfelderfassungsdaten 9a definiert.

Gemäß einer bevorzugten Ausführung ist die Umfelderfassung 8, insbesondere das KI-Modul 14 und weiter insbesondere ein Fahrzeug-Subobjekt-Identifikation dazu ausgebildet, ein Fahrzeugteil 22 als ein Fahrzeug-Subobjekt zu erkennen und/oder ein Anbauteil 23 als ein Fahrzeug-Subobjekt 21 zu erkennen.

Alternativ oder zusätzlich kann die Ausbildung vorsehen, in den momentanen Umfelderfassungsdaten 9, weiter insbesondere in dem Fahrzeug-Umfelddatensatz 9a denjenigen Datenteil als einen Fahrzeug-Subobjekt-Umfelddatensatz 9b zu definieren, in dem die Repräsentation des zugehörigen Fahrzeug-Subobjekts 21, insbesondere die Repräsentation des zugehörigen Fahrzeugteils 22 und/oder die Repräsentation des zugehörigen Anbauteils 24 vorliegt.

Eine Festlegung eines Fahrzeug-Subobjekt-Umfelddatensatz 9b kann auf beliebige Weise erfolgen. Eine erste mögliche Ausführung sieht die Definition einer Fahrzeug-Subobjekt Bounding-box B2 vor, die insbesondere seine achsparallele Bounding-box oder als eine orientierte Bounding-box definiert sein kann.

Eine alternative oder zusätzliche Ausführung sieht ein Tracking einer Fahrzeug-Subobjekt Bounding-box B2 innerhalb vorhergehender und momentaner Umfelderfassungsdaten 9 vor, insbesondere als eine achsparallele Bounding-box oder als eine orientierte Bounding-box

Die Erfassung einer Subobjekt-Lokalisierung 22 kann auf beliebige Weise erfolgen, besonders bevorzugt durch ein ggf. separates neuronales Netz 15.

Eine Subobjekt-Lokalisierung 22 kann eine Fahrzeugteil-Lokalisierung 23a und/oder eine Anbauteil-Lokalisierung 24a sein.

Eine Subobjekt-Lokalisierung 22 kann gemäß einer bevorzugten Ausführung eine Raumlage und insbesondere eine Raumausdehnung eines zugehörigen Fahrzeugteils 23 oder Anbauteils 24 in computerlesbarer Form definieren. Die Klassifikation einer Ausnahme-Eigenschaft LS kann auf beliebige Weise erfolgen, insbesondere mit einem bevorzugt separaten neuronalen Netz 15, weiter insbesondere mit einem Eigenschaft-Klassifikator.

Eine bevorzugte Ausführung sieht vor, dass die Umfelderfassung 8, insbesondere das KI-Modul 14 weiter insbesondere ein Key Point-Identifikator dazu ausgebildet ist, mindestens einen Key Point P,P1, weiter bevorzugt mindestens zwei Key Points P1,P2 an einem Fahrzeug-Subobjekt 21 zu identifizieren.

Gemäß einer bevorzugten Ausführung ist vorgesehen, dass eine Ausnahme-Eigenschaft LS eines Fahrzeug-Subobjekts 21, insbesondere eines Fahrzeugteils 23, auf Basis einer Relativlage von mindestens zwei Key Points P1,P2 an dem Fahrzeugteil 23 und die darauf basierende Klassifizierung einer Ausnahme-Eigenschaft LS können auf beliebige Weise erfolgen.

Gemäß einer bevorzugten Ausführung wird ein erster Key Point an einem dorsalen (zum Fahrzeugkörper weisenden) Ende oder an einem Gelenksabschnitt des Fahrzeugteils 23 identifiziert und mindestens ein weiterer Key Point P2, P3, P4 an einem dorsalen (vom Fahrzeugkörper abgewandten) Ende des Fahrzeugteils 23 identifiziert.

Eine bevorzugte Ausführung sieht vor, dass die Erkennung einer Ausnahme-Eigenschaft LS eines Fahrzeugteils 23 ausschließlich innerhalb eines Fahrzeug-Subobjekt-Umfelddatensatz 9b und/oder auf Basis dort vorliegende Key Points erfolgt.

Besonders bevorzugt erfolgt die Erkennung einer Subobjekt-Lokalisierung 22 innerhalb eines Fahrzeug-Subobjekt-Umfelddatensatzes 9b und/oder auf Basis der Definition einer Fahrzeug-Subobjekt Bounding-box B2.

Besonders bevorzugt erfolgt die Erkennung einer Subobjekt-Lokalisierung 22 auf Basis mindestens eines Key Points P, der bevorzugt einem Fahrzeug-Subobjekt zugeordnet ist. Insbesondere kann eine Subobjekt-Lokalisierung 22 auf Basis mindestens eines Key Points an einem dorsalen Abschnitt eines Fahrzeug-Subobjekts 21 geschätzt werden. Alternativ oder zusätzlich kann eine Subobjekt-Ausdehnung auf Basis mindestens eines Key Points P an einem distalen Abschnitt des Fahrzeug-Subobjekts 21 geschätzt werden.

Die Erkennung einer Subobjekt-Lokalisierung 22 kann bevorzugt durch mindestens ein separates neuronales Netz 15 erfolgen, insbesondere durch einen Subobjekt-Lage-Schätzer und/oder einen Subobjekt-Ausdehnung-Schätzer. Dieser kann gegebenenfalls als ein bevorzugt separates Subnetz vorliegen. Abwandlungen der Erfindung sind in verschiedener Weise möglich. Insbesondere können alle oben beschriebenen Bestandteile oder Arbeitsschritte einer Anlagensteuerung entsprechende Bestandteile oder Arbeitsschritte eines Objekterkennungsverfahrens oder eines Steuerverfahrens sein oder entsprechend umgekehrt. Die zu den Ausführungsbeispielen offenbarten Merkmale können in beliebiger Weise miteinander kombiniert oder gegeneinander ersetzt werden.

Die Anlagensteuerung 7 und insbesondere die Umfelderfassung 8 kann bevorzugt dazu ausgebildet sein, dass sie eine erkannte Ausnahmebeschaffenheit KS überprüft. Die Überprüfung kann auf beliebige Weise erfolgen, insbesondere durch die Bestimmung eines Modelltyps des zu behandelnden Fahrzeugs 80 und Vergleich der momentanen Umfelderfassungsdaten 9 mit Referenzdaten 28 für ein Fahrzeug dieses Modelltyps in einer vorbekannten Standardkonfiguration KB.

Eine Adaption eines Behandlungsprogramms für eine Fahrzeugbehandlung kann auf beliebige Weise erfolgen und von einem beliebigen Teil der Fahrzeugbehandlungsanlage oder der Anlagensteuerung erfolgen.

Eine bevorzugte Ausführung sieht vor, dass ein Behandlungsprogramm derart adaptiert wird, dass im Bereich einer erkannten Subobjekt-Lokalisierung 22, insbesondere im Bereich der Fahrzeugteil-Lokalisierung 23a und/oder im Bereich der erkannten Anbauteil-Lokalisierung 24a mindestens eine der folgenden Änderungen erfolgt.

Mindestens ein Behandlungsaggregat 3,4,5 der Fahrzeugbehandlungsanlage 1 wird mit einer adaptierten Bewegungsbahn und/oder einer gesteigerten Sensitivität bewegt.

Alternativ oder zusätzlich: Mindestens ein Behandlungsaggregat 3,4,5, insbesondere ein kontaktierendes Behandlungsaggregat 3,4 der Fahrzeugbehandlungsanlage 1 wird mit einem lokal verminderten körperlichen Behandlungseingriff oder lokal ohne körperlichen Behandlungseingriff bewegt.

Alternativ oder zusätzlich: Eine regulär vorgesehene Behandlung mit einem ersten Behandlungsaggregat 3, 4,5 wird durch eine alternative Behandlung mit einem anderen Behandlungsaggregat 3,4,5 ersetzt. Das erste Behandlungsaggregat kann insbesondere ein kontaktierendes Behandlungsaggregat 3,4 sein und weiter insbesondere kann das andere Behandlungsaggregat ein Fern-Behandlungsaggregat 5 sein.

Eine zulässige Ausnahmebeschaffenheit kann (klassifiziert oder) vorgesehen sein UND/ODER eine Adaption eines Behandlungsprogramms kann für bestimmte Fahrzeug-Subobjekte, insbesondere Fahrzeugteile (23) vorgesehen sein, insbesondere für:
▪ Eine Anhängerkupplung, insbesondere bei Vorliegen der (zulässigen) Ausnahme-Eigenschaft: ausgeklappt;
▪ Eine Anhängerkupplung, insbesondere bei Vorliegen der (zulässigen) Ausnahme-Eigenschaft: Schrägstellung;
▪ Ein Spoiler, insbesondere bei Vorliegen der (zulässigen) Ausnahme-Eigenschaft: ausgefahren;
▪ Ein Ladeanschluss bei Vorliegen der (zulässigen) Ausnahme-Eigenschaft: Ladekabel eingesteckt;
▪ Eine Klappe mit (zulässiger) Ausnahme-Eigenschaft: Klappe geöffnet;
▪ Ein Deckel mit (zulässiger) Ausnahme-Eigenschaft: Deckel geöffnet;
▪ Ein Karosseriespalt, insbesondere an der Motorhaube, mit (zulässiger) Ausnahme-Eigenschaft: Spalt geöffnet;
▪ Ein Scheibenwischer, insbesondere bei Vorliegen der (zulässigen) Ausnahme-Eigenschaft: Scheibenwischer in aufrechter Position;
▪ Ein Scheibenwischer, insbesondere bei Vorliegen der (zulässigen) Ausnahme-Eigenschaft: Scheibenwischer in Bewegung;
▪ Ein Schweller bei Vorliegen der (zulässigen) Ausnahme-Eigenschaft:
   Fahrzeug tiefergelegt;
▪ Ein Schweller bei Vorliegen der (zulässigen) Ausnahme-Eigenschaft:
   höhergelegt;
▪ Ein Kotflügel bei Vorliegen der (zulässigen) Ausnahme-Eigenschaft:
   Kotflügel-Überstand;
▪ Ein Rad bei Vorliegen der (zulässigen) Ausnahme-Eigenschaft: Rad in Kurvenfahrt-Stellung;
▪ Ein Fahrzeug-Spiegel (81) bei Vorliegen der (zulässigen) Ausnahme-Eigenschaft: Spiegel ausgeklappt;

Eine zulässige Ausnahmebeschaffenheit kann (klassifiziert oder) vorgesehen sein UND/ODER Eine zulässige Ausnahmebeschaffenheit kann (klassifiziert oder) vorgesehen sein UND/ODER eine Adaption eines Behandlungsprogramms kann für beliebige Fahrzeug-Subobjekte, insbesondere Anbauteile (24) vorgesehen sein, insbesondere für:
▪ Ein Dachträger, insbesondere bei Vorliegen der (zulässigen) Ausnahme-Eigenschaft: keine Beladung;
▪ Ein Heckträger, insbesondere bei Vorliegen der (zulässigen) Ausnahme-Eigenschaft: keine Beladung;
▪ Eine Transportbox, insbesondere bei Vorliegen der (zulässigen) Ausnahme-Eigenschaft: geschlossen;
▪ Ein Ersatzrad (zulässiges Anbauteil);
▪ Eine Fensterspaltkappe (zulässiges Anbauteil);
▪ Ein Informationsschild, insbesondere ein Taxischild (zulässiges Anbauteil);
▪ Eine Signalbeleuchtung, insbesondere eine Blaulichtanlage (zulässiges Anbauteil);

Eine unzulässige Ausnahmebeschaffenheit kann (klassifiziert oder) vorgesehen sein UND/ODER das Unterbinden eines Starts eines Behandlungsprogramms und/oder das Unterbrechen eines laufenden Behandlungsprogramms kann für beliebige Fahrzeug-Subobjekte, insbesondere Fahrzeugteile (23) vorgesehen sein, insbesondere für:
▪ Eine Antenne mit (unzulässiger) Ausnahme-Eigenschaft: ausgefahren;
▪ Eine Kühlerfigur mit (unzulässiger) Ausnahme-Eigenschaft: unzulässig hoher Überstand;
▪ Eine Fahrzeug-Türe mit (unzulässiger) Ausnahme-Eigenschaft: Türe geöffnet;
▪ Ein Fahrzeug-Fenster mit (unzulässiger) Ausnahme-Eigenschaft: Fenster geöffnet;
▪ Ein Scheibenwischer, insbesondere bei Vorliegen der (unzulässigen) Ausnahme-Eigenschaft: von Scheibe abgehoben;

Das Unterbinden eines Starts eines Behandlungsprogramms und/oder das Unterbrechen eines laufenden Behandlungsprogramms kann für beliebige Fahrzeug-Subobjekte vorgesehen sein, insbesondere für:
Eine unzulässige Ausnahmebeschaffenheit kann (klassifiziert oder) vorgesehen sein UND/ODER das Unterbinden eines Starts eines Behandlungsprogramms und/oder das Unterbrechen eines laufenden Behandlungsprogramms kann für beliebige Fahrzeug-Subobjekte, insbesondere Anbauteile (24) vorgesehen sein, insbesondere für:
▪ Ein Dachträger, insbesondere bei Vorliegen der (unzulässigen) Ausnahme-Eigenschaft: mit Beladung;
▪ Ein Heckträger, insbesondere bei Vorliegen der (unzulässigen) Ausnahme-Eigenschaft: mit Beladung;
▪ Eine Transportbox, insbesondere bei Vorliegen der (unzulässigen) Ausnahme-Eigenschaft: geöffnet;
▪ Ein Fahrrad (unzulässiges Anbauteil);
▪ Eine Skiausrüstung (unzulässiges Anbauteil);
▪ Ein Snowboard (unzulässiges Anbauteil);
▪ Ein Dachzelt (unzulässiges Anbauteil);
▪ Ein Boot (unzulässiges Anbauteil);

In allen Ausführungsvarianten und Aspekten gemäß der vorliegenden Offenbarung kann die Fahrzeugbehandlungsanlage beliebig ausgebildet sein. Sie kann insbesondere als eine Waschanlage oder eine Polieranlage ausgebildet sein. Sie kann die Bauform einer Portalanlage und/oder einer Behandlungsstraße haben.

In den Umfelderfassungsdaten kann jeweils auch eine Repräsentation zumindest eines Abschnitts und/oder eines Maschinenteils der Fahrzeugbehandlungsanlage umfasst sein.

In den Umfelderfassungsdaten kann jeweils auch eine Repräsentation des Umfelds der Fahrzeugbehandlungsanlage, insbesondere eines Einfahrtbereichs und/oder eines Ausfahrtbereichs umfasst sein.

### Bezugszeichen

- 1: Fahrzeugbehandlungsanlage
- 2: Aggregatträger / Portal
- 3: Behandlungsaggregat (kontaktierend) / Seitenbürste
- 4: Behandlungsaggregat (kontaktierend) / Dachbürste
- 5: Behandlungsaggregat (kontaktlos) / Fernbehandlungsaggregat / Strahlreinigungs-Vorrichtung
- 6: Anlagenumfeld
- 6a: Behandlungsbereich
- 6b: Zufahrtbereich
- 6c: Ausfahrtbereich
- 7: Anlagensteuerung / Fahrzeugbehandlungsanlagensteuerung
- 8: Umfelderfassung
- 9: Umfelderfassungsdaten / Gesamt-Umfelddatensatz
- 9a: Fahrzeug-Umfelddatensatz
- 9b: Fahrzeug-Subobjekt-Umfelddatensatz / Fahrzeugteil-Umfelddatensatz / Anbauteil-Umfelddatensatz
- 10: Sensor
- 11: Sensor
- 12: Repräsentation eines Fahrzeugs
- 13: Ablaufsteuerung
- 14: Kl-Modul
- 15: Neuronales Netz
- 20: Fahrzeug-Objekt
- 21: Fahrzeug-Subobjekt
- 22: Subobjekt-Lokalisierung
- 22a: Subobjekt-Ausdehnung
- 23: Fahrzeugteil
- 23a: Fahrzeugteil-Lokalisierung
- 24: Anbauteil
- 24a: Anbauteil-Lokalisierung
- 25: Erkennungs-Netzwerk
- 26a: Subnetz / Fahrzeug-Identifikator
- 26b: Subnetz / Fahrzeug-Subobjekt-Identifikator
- 26c: Subnetz / Eigenschaft-Klassifikator
- 27,27': Filterabschnitt
- 28: Referenzdaten
- 30: Datenverarbeitungseinrichtung
- 40: Repräsentation eines Teils der Fahrzeugbehandlungsanlage
- 80: Fahrzeug (zu behandelndes)
- 81: Fahrzeug-Spiegel / Seitenspiegel

- B1: Fahrzeug Bounding-box
- B2: Fahrzeug-Subobjekt Bounding-box
- KB: Standardkonfiguration
- KS: Ausnahmebeschaffenheit, erkannt / Datenstruktur
- LB: Standard-Eigenschaft
- LS: Ausnahme-Eigenschaft
- P, Pi: Key-point
- TA: Anbauteil-Typ

## Patentansprüche

1. Fahrzeugbehandlungsanlagensteuerung (7) für eine Fahrzeugbehandlungsanlage (1), wobei die Fahrzeugbehandlungsanlagensteuerung (7) eine Umfelderfassung (8) aufweist, die Umfelderfassungsdaten (9) von mindestens einem bildgebenden Sensor (10, 11) bezieht, wobei die Umfelderfassungsdaten (9) zumindest zeitweise eine Repräsentation (12) eines zu behandelnden Fahrzeugs (80) umfassen, wobei die Umfelderfassung (8) weiterhin ein trainiertes KI-Modul (14) umfasst, das innerhalb der momentanen Umfelderfassungsdaten (9) eine Beschaffenheit des zu behandelnden Fahrzeugs analysiert, **dadurch gekennzeichnet, dass** das KI-Modul (14) eine für den Behandlungseingriff relevante Ausnahmebeschaffenheit (KS) des Fahrzeugs erkennt, und dass die Fahrzeugbehandlungsanlagensteuerung (7) auf Basis der erkannten Ausnahmebeschaffenheit (KS) ein Behandlungsprogramm der Fahrzeugbehandlung adaptiert und startet oder fortsetzt, wobei
- das KI-Modul (14) dazu trainiert ist,
▪ das Vorhandensein mindestens eines Fahrzeug-Subobjekts (21), nämlich eines an der Fahrzeugkontur angebrachten Anbauteils (24) zu erkennen, und
▪ ein erkanntes Anbauteil mit einem bestimmten Anbauteil-Typ (TA) zu klassifizieren, wobei die Adaption spezifisch für das erkannte Anbauteil (24) erfolgt, und/oder wobei
- das KI-Modul (14) dazu trainiert ist,
▪ ein Fahrzeug-Subobjekt (21), nämlich ein Fahrzeugteil (23) zu erkennen, und
▪ für das Fahrzeugteil (23) mindestens eine Ausnahme-Eigenschaft (LS) zu klassifizieren, die als zulässig für eine Fahrzeugbehandlung definiert ist, wobei die Adaption des Behandlungsprogramms spezifisch für das erkannte Fahrzeugteil (23) und die Ausnahme-Eigenschaft (LS) erfolgt.

2. Fahrzeugbehandlungsanlagensteuerung (7) nach dem vorhergehenden Anspruch, wobei die Fahrzeugbehandlungsanlagensteuerung (7) Zugriff auf eine Zulässigkeits-Datenbank hat oder diese umfasst, wobei die Zulässigkeits-Datenbank eine Liste von vordefinierten Fahrzeug-Subobjekten (21), insbesondere Fahrzeugteilen (23) und/oder Anbauteilen (24), und zuordenbaren Ausnahme-Eigenschaften umfasst.

3. Fahrzeugbehandlungsanlagensteuerung (7) nach einem der vorhergehenden Ansprüche, wobei die Ausnahme-Eigenschaft (LS) insbesondere in Abgrenzung zu einer Standard-Eigenschaft (LB) des Fahrzeug-Subobjekts (21) klassifiziert und/oder erkannt ist.

4. Fahrzeugbehandlungsanlagensteuerung nach einem der vorhergehenden Ansprüche, wobei die Fahrzeugbehandlungsanlagensteuerung (7), insbesondere die Umfelderfassung (8) dazu ausgebildet ist, eine erkannte Ausnahmebeschaffenheit (KS) als zulässig oder unzulässig für eine Adaption eines Behandlungsprogramms zu klassifizieren.

5. Fahrzeugbehandlungsanlagensteuerung nach einem der vorhergehenden Ansprüche, wobei das Fahrzeug-Subobjekt (21) ein Anbauteil (24) gemäß der folgenden Liste ist:
▪ Ein Dachträger, insbesondere bei Vorliegen der Ausnahme-Eigenschaft: keine Beladung;
▪ Ein Heckträger, insbesondere bei Vorliegen der Ausnahme-Eigenschaft: keine Beladung;
▪ Eine Transportbox, insbesondere bei Vorliegen der Ausnahme-Eigenschaft: geschlossen;
▪ Ein Ersatzrad;
▪ Ein Informationsschild, insbesondere ein Taxischild;
▪ Eine Signalbeleuchtung, insbesondere eine Blaulichtanlage;

6. Fahrzeugbehandlungsanlagensteuerung nach einem der vorhergehenden Ansprüche, wobei das Fahrzeug-Subobjekt ein Fahrzeugteil (23) gemäß der folgenden Liste ist:
▪ Eine Antenne, insbesondere mit Ausnahme-Eigenschaft:
ausgefahren;
▪ Eine Kühlerfigur, insbesondere mit Ausnahme-Eigenschaft:
unzulässig hoher Überstand;
▪ Eine Anhängerkupplung, insbesondere bei Vorliegen der Ausnahme-Eigenschaft: ausgeklappt;
▪ Eine Anhängerkupplung, insbesondere bei Vorliegen der Ausnahme-Eigenschaft: Schrägstellung;
▪ Ein Karosseriespalt, insbesondere an der Motorhaube, mit Ausnahme-Eigenschaft: Spalt geöffnet;
▪ Ein Scheibenwischer, insbesondere bei Vorliegen der Ausnahme-Eigenschaft: Scheibenwischer in aufrechter Position;
▪ Ein Scheibenwischer, insbesondere bei Vorliegen der Ausnahme-Eigenschaft: Scheibenwischer in Bewegung;
▪ Ein Scheibenwischer, insbesondere bei Vorliegen der Ausnahme-Eigenschaft: Scheibenwischer von Scheibe abgehoben;
▪ Ein Schweller bei Vorliegen der Ausnahme-Eigenschaft:
Fahrzeug tiefergelegt;
▪ Ein Schweller bei Vorliegen der Ausnahme-Eigenschaft:
Fahrzeug höhergelegt;
▪ Ein Kotflügel bei Vorliegen der Ausnahme-Eigenschaft:
Kotflügel-Überstand;
▪ Ein Fahrzeug-Spiegel (81) bei Vorliegen der Ausnahme-Eigenschaft: Spiegel ausgeklappt.

7. Fahrzeugbehandlungsanlagensteuerung (7) nach einem der vorhergehenden Ansprüche, wobei eine Adaption eines Behandlungsprogramms für eine erkannte Subobjekt-Lokalisierung (22) und/oder eine erkannte Subobjekt-Ausdehnung (23) erfolgt.

8. Fahrzeugbehandlungsanlagensteuerung (7) nach einem der vorhergehenden Ansprüche, wobei eine Adaption vorsieht, dass an einem Fahrzeug-Subobjekt (21), insbesondere an einem Fahrzeugteil (23) des zu behandelnden Fahrzeugs (80) oder an einem Anbauteil (24) am Fahrzeug,
- ein veränderter Behandlungseingriff erfolgt; oder
- ein Behandlungseingriff lokal unterbleibt; und/oder dass
- ein alternativer Behandlungsgriff durch ein anderes Behandlungsaggregat erfolgt.

9. Fahrzeugbehandlungsanlagensteuerung (7) nach einem der vorhergehenden Ansprüche, wobei eine Adaption vorsieht, dass
- mindestens ein Behandlungsaggregat (3, 4, 5) mit einer adaptierten Bewegungsbahn und/oder einer gesteigerten Sensitivität bewegt wird; UND/ODER dass
- mindestens ein Behandlungsaggregat, insbesondere ein kontaktierendes Behandlungsaggregat der Fahrzeugbehandlungsanlage, mit einem lokal verminderten körperlichen Behandlungseingriff oder lokal ohne körperlichen Behandlungseingriff bewegt wird; UND/ODER dass
- eine regulär vorgesehene Behandlung mit einem ersten Behandlungsaggregat (3, 4, 5) durch eine alternative Behandlung mit einem anderen Behandlungsaggregat (3, 4, 5) ersetzt wird, wobei insbesondere das erste Behandlungsaggregat ein kontaktierendes Behandlungsaggregat (3, 4) ist und weiter insbesondere das andere Behandlungsaggregat ein Fern-Behandlungsaggregat (5) ist.

10. Fahrzeugbehandlungsanlagensteuerung nach einem der vorhergehenden Ansprüche, wobei die erkannte Ausnahmebeschaffenheit (KS)
- als eine initiale Ausnahmebeschaffenheit erkannt wird, die zeitlich vor dem Start einer Fahrzeugbehandlung vorliegt; UND/ODER
- als eine nachträgliche Ausnahmebeschaffenheit erkannt wird, die erst nach dem Start einer Fahrzeugbehandlung eintritt oder die eine Änderung gegenüber der initialen Ausnahmebeschaffenheit aufweist.

11. Fahrzeugbehandlungsanlagensteuerung nach einem der vorhergehenden Ansprüche, wobei das (trainerte) KI-Modul (14) mindestens ein neuronales Netz (15) umfasst, insbesondere mindestens ein convolutional neural network.

12. Fahrzeugbehandlungsanlage (1) zur Behandlung mindestens eines Fahrzeugs (80) mit einem oder mehreren Behandlungsaggregaten (3, 4, 5), **dadurch gekennzeichnet, dass** die Fahrzeugbehandlungsanlage (1) eine Fahrzeugbehandlungsanlagensteuerung (7) nach einem der vorhergehenden Ansprüche umfasst.

13. Objekterkennungsverfahren zur Unterstützung einer Anlagensteuerung (7) in einer Fahrzeugbehandlungsanlage (1), wobei das Objekterkennungsverfahren als ein computerimplementiertes Verfahren auf einer Datenverarbeitungseinrichtung (30), insbesondere auf der Anlagensteuerung (7), ausgeführt wird und die folgenden Schritte umfasst: Beziehen von Umfelderfassungsdaten (9), die durch mindestens einen bildgebenden Sensor (10, 11) an der Fahrzeugbehandlungsanlage (1) erfasst sind, wobei die Umfelderfassungsdaten (9) zumindest zeitweise eine Repräsentation (12) eines zu behandelnden Fahrzeugs umfassen; mittels eines trainierten KI-Moduls (14): Analysieren einer Beschaffenheit des zu behandelnden Fahrzeugs (80) innerhalb der momentanen Umfelderfassungsdaten (9);
**dadurch gekennzeichnet, dass** das KI-Modul (14) eine für den Behandlungseingriff relevante Ausnahmebeschaffenheit (KS) des Fahrzeugs erkennt, und dass auf Basis der erkannten Ausnahmebeschaffenheit (KS) ein Behandlungsprogramm der Fahrzeugbehandlung adaptiert und gestartet oder fortgesetzt wird, wobei
- das KI-Modul (14) dazu trainiert ist,
▪ das Vorhandensein mindestens eines Fahrzeug-Subobjekts (21), nämlich eines an der Fahrzeugkontur angebrachten Anbauteils (24) zu erkennen, und
▪ das erkannte Anbauteil mit einem bestimmten Anbauteil-Typ (TA) zu klassifizieren, wobei die Adaption spezifisch für das erkannte Anbauteil (24) erfolgt, und/oder wobei
- das KI-Modul (14) dazu trainiert ist,
▪ ein Fahrzeug-Subobjekt (21), nämlich ein Fahrzeugteil (23) zu erkennen, und
▪ für das Fahrzeugteil (23) mindestens eine Ausnahme-Eigenschaft (LS) zu klassifizieren, die als zulässig für eine Fahrzeugbehandlung definiert ist, wobei die Adaption des Behandlungsprogramms spezifisch für das erkannte Fahrzeugteil (23) und die Ausnahme-Eigenschaft (LS) erfolgt.

14. Objekterkennungsverfahren gemäß dem vorhergehenden Anspruch, wobei das Verfahren weiterhin die folgenden Schritte umfasst: auf Basis der erkannten Ausnahmebeschaffenheit (KS) des zu behandelnden Fahrzeugs
- Verhindern eines Starts der Fahrzeugbehandlung, insbesondere auf Basis einer initialen unzulässigen Ausnahmebeschaffenheit; UND/ODER
- Adaptieren eines Behandlungsprogramm für die Fahrzeugbehandlung und starten der Fahrzeugbehandlung auf Basis einer initialen zulässigen Ausnahmebeschaffenheit; UND/ODER
- Unterbrechen einer laufenden Fahrzeugbehandlung, insbesondere auf Basis einer nachträglichen unzulässigen Ausnahmebeschaffenheit; UND/ODER
- Adaptieren eines laufenden Behandlungsprogramms und Fortsetzen der Fahrzeugbehandlung auf Basis einer nachträglichen zulässigen Ausnahmebeschaffenheit.

15. Softwareprodukt für eine Fahrzeugbehandlungsanlagensteuerung (7), wobei das Softwareprodukt auf einem Datenträger gespeichert oder über eine Datenschnittstelle übertragen ist, und wobei das Softwareprodukt Anweisungen umfasst, die bei einer Implementierung auf einer Datenverarbeitungseinrichtung (30) ein Objekterkennungsverfahren nach einem der vorhergehenden Ansprüche ausführen.
